(19)

**Europäisches Patentamt**

**European Patent Office**

**Office européen des brevets**

(11) **EP 4 715 888 A1**

(12) **EUROPEAN PATENT APPLICATION**

(43) Date of publication:
25.03.2026 Bulletin 2026/13

(21) Application number: 25203863.3

(22) Date of filing: 23.09.2025

(51) International Patent Classification (IPC):
$H01M \ 4/131 \ ^{(2010.01)}$     $H01M \ 4/36 \ ^{(2006.01)}$
$H01M \ 4/485 \ ^{(2010.01)}$     $H01M \ 4/525 \ ^{(2010.01)}$
$H01M \ 4/62 \ ^{(2006.01)}$

(52) Cooperative Patent Classification (CPC):
H01M 4/131; H01M 4/364; H01M 4/366;
H01M 4/485; H01M 4/525; H01M 4/628;
H01M 4/1391; H01M 10/052; H01M 2004/028

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 23.09.2024 KR 20240128559
13.06.2025 KR 20250078100

(71) Applicant: SAMSUNG SDI CO., LTD.
Yongin-si, Gyeonggi-do 17084 (KR)

(72) Inventors:
• KIM, Do-Yu
17084 Yongin-si, Gyeonggi-do (KR)
• SONG, Jayhyok
17084 Yongin-si, Gyeonggi-do (KR)
• YUN, Pilsang
17084 Yongin-si, Gyeonggi-do (KR)
• YANG, Hwichul
17084 Yongin-si, Gyeonggi-do (KR)
• CHO, Tae Ho
17084 Yongin-si, Gyeonggi-d (KR)

(74) Representative: Gulde & Partner
Patent- und Rechtsanwaltskanzlei mbB
Berliner Freiheit 2
10785 Berlin (DE)

(54) **POSITIVE ELECTRODE ACTIVE MATERIALS FOR ALL-SOLID-STATE RECHARGEABLE BATTERIES, PREPARATION METHODS OF POSITIVE ELECTORDE ACTIVE MATERIALS, AND ALL-SOLID-STATE RECHARGEABLE BATTERIES**

(57) Disclosed are a positive electrode active material for an all-solid-state rechargeable battery, a method of preparing the positive electrode active material, and an all-solid-state rechargeable battery. The positive electrode active material includes a first positive electrode active material including a first lithium nickel-based composite oxide particle in a form of secondary particles formed by agglomeration of primary particles. A first coating layer is disposed on surfaces of the first lithium nickel-based composite oxide particles and includes boron. A second coating layer is disposed on the first coating layer and includes zirconium. The positive electrode active material also comprises a second positive electrode active material comprising a second lithium nickel-based composite oxide particle in a form of single particles. A third coating layer is disposed on surfaces of the second lithium nickel-based composite oxide particles and includes zirconium.

EP 4 715 888 A1

**Description**

**BACKGROUND**

**1. Field**

Positive electrode active materials for all-solid-state rechargeable batteries, preparation methods of positive electrode active materials, and all-solid-state rechargeable batteries are disclosed.

**2. Description of the Related Art**

Rechargeable lithium batteries are used in portable information devices such as cell phones, laptops, smart phones. Rechargeable lithium batteries are also used in electric vehicles because of the batteries' high energy density and easy portability as a driving power source. Recently, research has been actively conducted to use a rechargeable lithium battery with high energy density as a driving power source or power storage power source for hybrid vehicles.

Rechargeable lithium batteries include a solid or liquid electrolyte depending on the type of battery. As compared to a liquid electrolyte, a solid electrolyte has problems of low ionic conductivity, resistance on the interface with solid particles of a positive electrode active material and the like in a battery, deterioration of the ion conduction performance by formation of a depletion layer by solid-to-solid bonding, and the like. But there is a need for development of a positive electrode with which solid electrolytes can be applied, and research is needed on ways to improve the overall performance of all-solid-state rechargeable batteries, including capacity, charge/discharge efficiency, resistance characteristics, and cycle-life characteristics.

**SUMMARY**

The invention is defined by the appended claims. The description that follows is subjected to this limitation. Any disclosure lying outside the scope of said claims is only intended for illustrative as well as comparative purposes.

Provided are a positive electrode active material having low interfacial resistance, high initial charge/discharge capacity and efficiency, and excellent cycle-life and high-rate capability, a method for preparing the positive electrode active material, and an all-solid-state rechargeable battery.

Some example embodiments of the present disclosure provide a positive electrode active material for an all-solid-state rechargeable battery which includes: a first positive electrode active material including a first lithium nickel-based composite oxide particle in a form of secondary particles that are formed by agglomeration of primary particles, with a first coating layer disposed on surfaces of the first lithium nickel-based composite oxide particle and including boron, and a second coating layer disposed on the first coating layer and containing zirconium; and a second positive electrode active material comprising a second lithium nickel-based composite oxide particle in a form of single particles, with a third coating layer disposed on surfaces of the second lithium nickel-based composite oxide particle and containing zirconium.

Some example embodiments of the present disclosure provide a method of preparing a positive electrode active material for an all-solid-state rechargeable battery which includes: (i) mixing a first positive electrode active material precursor in a form of secondary particles including a first nickel-based composite hydroxide and formed by agglomeration of primary particles, a lithium raw material, and a boron raw material, to thereby form a mixture, (ii) performing a first heat treatment on the mixture at a temperature of 650 °C to 850 °C to obtain a boron-coated first preliminary positive electrode active material, (iii) dry mixing the boron-coated first preliminary positive electrode active material, a second preliminary positive electrode active material including a second lithium nickel-based composite oxide and having a form of a single particle, and a zirconium raw material, to thereby form a dry mixture, and (iv) performing a second heat treatment to obtain a positive electrode active material.

Some example embodiments provide an all-solid-state rechargeable battery that includes a positive electrode including the aforementioned positive electrode active material for the all-solid-state rechargeable battery, a sulfide-based solid electrolyte, a negative electrode, and solid electrolyte layer between the positive electrode and the negative electrode.

According to some example embodiments, a positive electrode active material exhibits low interfacial resistance, high capacity, high initial charge/discharge efficiency, and excellent cycle-life and high-rate capability.

**BRIEF DESCRIPTION OF THE DRAWINGS**

FIG. 1 is a schematic view showing the shape of a plate-shaped primary particle according to embodiments of the present disclosure.

FIG. 2 is a view for explaining the definition of a radial in secondary particles according to embodiments of the present disclosure.

FIG. 3 is a schematic view showing a cross-sectional structure of a secondary particle according to embodiments of the present disclosure.

FIG. 4 is a cross-sectional view schematically showing the structure of an all-solid-state rechargeable battery according to embodiments of the present disclosure.

FIG. 5 is a cross-sectional view schematically illustrating the structure of an all-solid-state rechargeable battery including a precipitation-type negative electrode according to embodiments of the present disclosure.

FIG. 6 is a cross-sectional view schematically illustrating the structure of an all-solid-state rechargeable battery in which two unit cells are stacked according to embodiments of the present disclosure.

FIG. 7 shows the results of evaluating the initial charge/discharge capacity and initial efficiency for the battery cells of Example 1 and Comparative Examples 1 to 3.

FIG. 8 shows the results of evaluating cycle-life characteristics of the battery cells of Example 1 and Comparative Examples 1 and 2.

FIG. 9 shows the results of measuring the plate density and volume capacity after warm isostatic pressing of the positive electrodes made in Example 1 and Comparative Examples 1 to 3.

FIG. 10 is an SEM image of the surface of the first preliminary positive electrode active material prepared in Example 1.

FIG. 11 is an SEM image of the surface of the mixed positive electrode active material prepared in Example 1.

FIG. 12 shows the results of evaluating the thermal stability of battery cells made in Example 1 and Comparative Examples 1 and 2.

## DETAILED DESCRIPTION

Hereinafter, specific embodiments will be described in detail so that those of ordinary skill in the art can easily implement them. However, this disclosure may be embodied in many different forms and is not construed as limited to the example embodiments set forth herein.

The terminology used herein is used to describe embodiments only and is not intended to limit the present disclosure. A singular expression includes a plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but such terms do not preclude the possibility of the presence or addition of one or more other features, number, step, element, or a combination thereof.

In the drawings, the thickness of layers, films, panels, regions, etc., are exaggerated for clarity and like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

In addition, "layer" herein includes not only a shape formed on the whole surface when viewed from a plan view, but also a shape formed on a partial surface.

An average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter ($D_{50}$) means a diameter of particles having a cumulative volume of 50 volume% in the particle size distribution. As used herein, when a definition is not otherwise provided, the average particle diameter means a diameter of particles having a cumulative volume of 50 volume% in the particle size distribution that is obtained by measuring the size (diameter or long axis length) of 20 particles at random in a scanning electron microscope image.

"Metal" is interpreted as a including ordinary metals, transition metals and metalloids (semi-metals).

"Thickness" may be measured, for example, by means of photographs taken with an electron microscope, such as a scanning electron microscope, or with an optical microscope.

## Positive Electrode Active Material for All-solid-state Rechargeable Battery

Some example embodiments provide a positive electrode active material for an all-solid-state rechargeable battery including a first positive electrode active material including a first lithium nickel-based composite oxide particle in a form of secondary particles formed by agglomeration of a plurality of primary particles, a first coating layer disposed on surfaces of the first lithium nickel-based composite oxide particles and containing boron, and a second coating layer disposed on the first coating layer and containing zirconium; and a second positive electrode active material comprising a second lithium nickel-based composite oxide particle in a form of single particles, and a third coating layer disposed on surfaces of the second lithium nickel-based composite oxide particles and containing zirconium.

The positive electrode active material has high structural stability, low interfacial resistance with a solid electrolyte, and smooth movement of lithium ions on the surface of positive electrode active material particles. As a result, the positive electrode active material has a high initial charge/discharge capacity and initial charge/discharge efficiency, and the positive electrode active material has excellent high-temperature cycle characteristics and high-rate capability.

The second positive electrode active material may have an average particle diameter ($D_{50}$) smaller than the average particle diameter ($D_{50}$) of the first positive electrode active material. That the second positive electrode active material has an average particle diameter ($D_{50}$) smaller than the average particle diameter ($D_{50}$) of the first positive electrode active material means that the average particle diameter ($D_{50}$) of the single particles of the second positive electrode active material is smaller than the average particle diameter ($D_{50}$) of the secondary particles of the first positive electrode active material. The first positive electrode active material may be in the form of large secondary particles, and the average particle diameter ($D_{50}$) of the secondary particles may be 8 μm to 25 μm, 9 μm to 25 μm, 11 μm to 18 μm, or 12 μm to 16 μm. The second positive electrode active material may be in the form of small single particles, and the average particle diameter ($D_{50}$) of the single particles may be 2 μm to 7 μm, for example, 2 μm to 6 μm, or 2 μm to 5 μm. Here, the average particle diameter ($D_{50}$) may be obtained by selecting 20 random particles from a scanning electron microscope image of the positive electrode active material, measuring particle diameters (diameter, long axis, or long axis length), then obtaining a particle size distribution, and then taking the size of particles having a cumulative volume of 50 volume% from the particle size distribution as the average particle diameter.

Based on a total of 100 wt% of the first positive electrode active material and the second positive electrode active material, the first positive electrode active material may be included in an amount of 60 wt% to 95 wt%, 70 wt% to 90 wt%, or 80 wt% to 90 wt%. The second positive electrode active material may be included in an amount of 5 wt% to 40 wt%, 10 wt% to 30 wt%, or 10 wt% to 20 wt%. When the first positive electrode active material and the second positive electrode active material are mixed within these weight ranges, the energy density of the positive electrode may be maximized while improving the capacity characteristics and cycle-life characteristics.

Core Particle of First Positive Electrode Active Material

The first positive electrode active material includes first lithium nickel-based composite oxide particles, each of which is a core particle including a first lithium nickel-based composite oxide (hereinafter, may be referred as "lithium nickel-based composite oxide of first positive electrode active material"), a first coating layer on a surface of the core particle, and a second coating layer on the first coating layer. The first lithium nickel-based composite oxide of core particles may be in a form of secondary particles in which a plurality of primary particles are agglomerated. At least a portion of the primary particles within each of the secondary particles may have a radial arrangement structure. These secondary particles may be expressed as radial secondary particles.

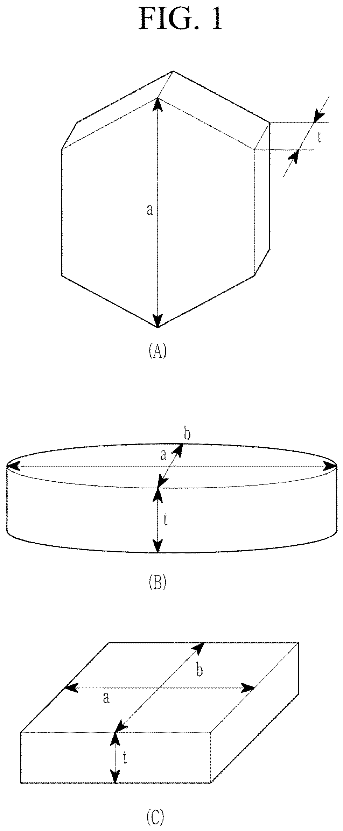

At least a portion of the primary particles may have a plate shape. FIG. 1 is a schematic view showing the plate shape of primary particles that form the secondary particles of the first positive electrode active material. Referring to FIG. 1, the primary particles according to some example embodiments have various shapes while having a basic plate structure. For example, the primary particles may have (A) a polygonal nanoplate shape such as a hexagon, (B) a nanodisk shape, and (C) a rectangular parallelepiped shape. In FIG. 1, "a" is the length of the long axis of the primary particle, "b" is the length of the short axis, and "t" is the thickness. Herein, the length (a) of the long axis may be a maximum length based on the widest surface of the primary particle. Thickness (t) may be a maximum length of the surface that is approximately perpendicular to the widest surface of the primary particle. The direction including the length (a) of the long axis and the length (b) of the short axis is defined as the plane direction, and the direction in which the thickness (t) is defined is defined as the thickness direction.

The thickness (t) of the primary particle may be less than the length (a) of the long axis and length (b) of the short axis, which are the lengths in the plane direction. Among the lengths in the plane direction, the length (a) of the long axis may be longer or the same as the length (b) of the short axis.

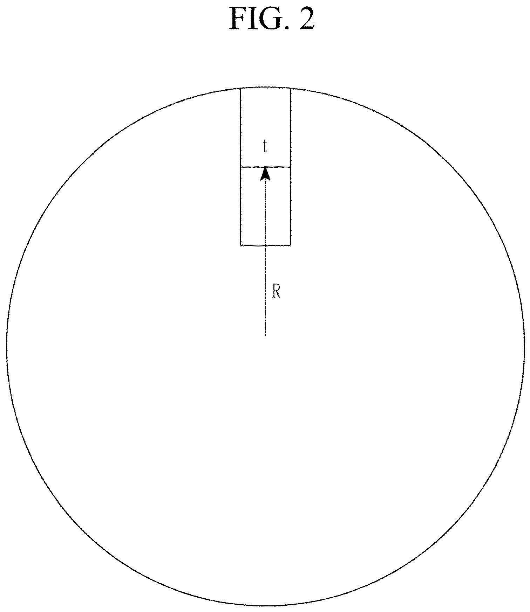

In the first positive electrode active material, at least a portion of the primary particles may have a radial arrangement structure, for example, the long axes of the primary particles may be arranged in a radial direction. FIG. 2 shows the definition of a radial in secondary particles according to some example embodiments. In some example embodiments, the radially arranged structure means that, as shown in FIG. 2, the thickness (t) direction of the primary particles is perpendicular to or within an angle of ± 5° of perpendicular to the direction (R) from the secondary particles from the center to the surface of the secondary particles. Here, average length means the average length of the long axis length (a) in the plane direction when the primary particles are plate-shaped, and when the primary particle is spherical, it means the average particle diameter.

When the primary particles are plate-shaped, an average thickness of the primary particles may be for example greater than or equal to 50 nm, greater than or equal to 100 nm, greater than or equal to 200 nm, greater than or equal to 300 nm, greater than or equal to 400 nm, greater than or equal to 500 nm, greater than or equal to 600 nm, greater than or equal to 700 nm, greater than or equal to 800 nm, or greater than or equal to 900 nm, and for example less than or equal to 5 $\mu$m, less than or equal to 4 $\mu$m, less than or equal to 3 $\mu$m, less than or equal to 2 $\mu$m, less than or equal to 1 $\mu$m, less than or equal to 900 nm, less than or equal to 800 nm, less than or equal to 700 nm, less than or equal to 600 nm, or less than or equal to 500 nm, for example 100 nm to 200 nm. In addition, in the primary particles, a ratio of the average thickness to the average length may be 1:1 to 1:10, for example, 1:1 to 1:8, 1:1 to 1:6, or 1:2 to 1:5. Here, the length and thickness may be measured with a scanning electron microscope, the average length may mean an arithmetic mean value of 30 pieces of length data, and the average thickness may be an arithmetic mean value of 30 pieces of thickness data.

When the average length, the average thickness, and the ratio between the average thickness and the average length of the primary particles is in the above-described ranges and the primary particles are radially arranged, it is possible to have relatively great number of lithium diffusion pathways between grain boundaries on the surface of the secondary particles, and a large number of crystal planes capable of lithium transfer are exposed to outside so that lithium diffusion is improved and high charge/discharge efficiency and capacity can be secured. Additionally, if the primary particles are arranged radially, the pores exposed on the surfaces of the secondary particles are directed toward the center of the secondary particles, and such an arrangement further promotes the diffusion of lithium. Due to the radially arranged primary particles, uniform contraction and expansion are possible when lithium is deintercalated and/or intercalated. And, when lithium is deintercalated, pores exist in the (001) direction, which is the direction in which the particles expand, such that the pores act as a buffer. **In** addition, due to the size and arrangement of the primary particles, the probability of cracks occurring during contraction and expansion of the active material may be lowered, and the internal pores further alleviate the volume change to reduce the cracks generated in the active material during charging and discharging. As a result, there is improved cycle-life characteristics and reduced resistance increase of a rechargeable lithium battery including the positive electrode active material.

The first positive electrode active material may have irregular porous pores (an irregular porous structure) in at least one of the internal and external portions of the secondary particles. An irregular porous structure means that the structure has primary particles and pores, but the pore size, shape, location, etc. are not regular. **In** an example, the secondary particles may have an internal portion having an irregular porous structure and an external portion containing a radially arranged structure as a region surrounding the internal portion. That is, the primary particles in the internal portion that is irregular, unlike the primary particles in the external portion. A radially arranged structure means that at least a portion of the primary particles are arranged radially.

The term external portion may refer to a region that is within 30 % to 50 % in length from the outermost surface, or, more specifically, within 40 % in length from the outermost surface, with respect to a total distance from the center to the surface of the secondary particle. In a specific embodiment, the external portion may refer to a region within 3 $\mu$m from the outermost surface of the secondary particle. The term internal portion may refer to a region within 50 % to 70 % from the center, for example, within 60 % in length from the center, with respect to a total distance from the center to the surface of the secondary particle. In a specific embodiment, the internal portion may be a region excluding the region within 3 $\mu$m from the outermost surface of the secondary particle.

The secondary particles of the first positive electrode active material may include an external portion arranged in a radial structure and an internal portion having an irregular porous structure, wherein the internal portion of the secondary particles may include pores with a larger size than the pores in the external portion. For example, in the first positive electrode active material, the pores in the internal portion may have a size of 150 nm to 1 $\mu$m, and the pores in the external portion may have a size of less than 150 nm. When the internal pore size is larger than the external pore size, there is an advantage in that the lithium diffusion distance within the positive electrode active material is shortened compared to secondary particles having the same internal and external pore sizes. Thus, lithium is easily intercalated from the outside to the inside of the positive electrode active material, and also there is an effect of alleviating the volume change that occurs during charge and discharge. Here, the size of pores is a diameter when the pores are spherical or circular, and a length of a long axis when the pores are oval and the like. The size is measured with a scanning electron microscope.

The secondary particles of the first positive electrode active material may have open pores on the surface. The open pore size may be less than 150 nm, for example, 10 nm to 148 nm. An open pore is a pore in which some of the walls of the pore are not closed and is formed by the space between radially arranged plate-shaped primary particles, and is a pore deeply connected from the surface of the secondary particle toward the center. The open pores are connected to outside of the particles and can become passages through which substances can enter and exit the particles. The open pores may face the centers of the secondary particles, and may be formed to a depth of less than or equal to 150 nm, for example, 0.001 nm to 100 nm, or 1 nm to 50 nm on average from the surfaces of the secondary particles. The size and depth of the open pores may be measured by the BJH (Barrett, Joyner and Halenda) method, which is a method derived through the adsorption or desorption of nitrogen.

Closed pores may exist in the internal portion of the secondary particle, and closed pores and/or open pores may exist in the external portion. The closed pores may exclude or mostly exclude an electrolyte, while the open pores may include an electrolyte therein. The closed pores may be referred to as independent pores that are not connected to other pores since all of the walls of the pores are formed in a closed structure.

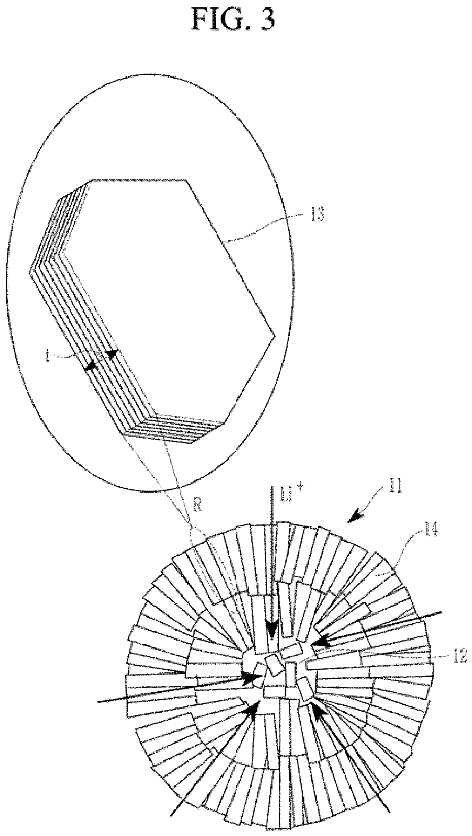

FIG. 3 is a schematic view showing the cross-sectional structure of a secondary particle of a first positive electrode active material. Referring to FIG. 3, the secondary particle 11 of the first positive electrode active material according to some example embodiments has an external portion 14 where plate-shaped primary particles 13 are arranged in a radial direction, and an internal portion 12 where the primary particles 13 are irregularly arranged. The internal portion 12 may have more empty spaces between primary particles than there are empty spaces in the external portion 14. Additionally, the pore size and porosity in the internal portion 12 are larger than the pore size and porosity in the external portion 14, and the pore size and pore size of in the internal portion 12 may be irregular. In FIG. 3, the arrow indicates the direction of movement of lithium ions.

The secondary particles have a porous structure in the internal portion, which has the effect of reducing the diffusion distance of lithium ions to the internal portion. And on the outside, the primary particles are arranged radially, making it easy for lithium ions to be inserted into the surface. Also, because the primary particles are small, it is easy to secure a lithium transfer path between the crystal grains and the pores between the primary particles alleviate the volume change that occurs during charging and discharging. Thus, the stress caused by the volume change during charging and discharging is minimized. The positive electrode active materials can reduce the resistance of rechargeable lithium batteries and improve capacity characteristics and cycle-life characteristics.

In the secondary particles, a plurality of primary particles may have a radial arrangement structure by being arranged toward a center to form surface contact along the thickness direction of the primary particles. Alternatively, the secondary particles may have a multi-center radial arrangement structure with multiple centers. When the secondary particles have a one-center or a multi-center radial arrangement structure, it is easy for lithium to be intercalated/deintercalated to the center portion of the secondary particles.

The secondary particles may include radial primary particles and non-radial primary particles. Based on 100 wt% of a total of the radial primary particles and non-radial primary particles, the amount of the non-radial primary particles may be less than or equal to 40 wt%, for example, 0.01 wt% to 30 wt%, or 0.1 wt% to 20 wt%.

Core Particle of Second Positive Electrode Active Material

The second positive electrode active material includes a second lithium nickel-based composite oxide particle, which are core particles each including a second lithium nickel-based composite oxide (hereinafter, may be referred as "lithium nickel-based composite oxide of second positive electrode active material"), and a third coating layer on the surface of the second lithium nickel-based composite oxide particle (core particle) and containing zirconium. The core particles of the second positive electrode active material may be in a form of single particles. The single particles may exist alone without a grain boundary within the particles, each be composed of one particle, and may each be a single particle, a monolith structure, a one body structure, or a non-agglomerated particle, in which particles are not agglomerated with each other but exist as an independent phase in terms of morphology. Further, the single particles may be expressed as single crystals. The single particles may exist alone, or single particles may be agglomerated together. For example, 2 to 10 single particles may be agglomerated and in contact with each other. According to some example embodiments, a positive electrode active material can exhibit improved cycle-life characteristics while implementing high capacity and high energy density by including a second positive electrode active material in the form of single particles.

The shapes of the single particles are not limited, and may be various shapes such as a polyhedron, an oval, a plate, a rod, an irregular shape, and the like.

Lithium Nickel-based Composite Oxide

The first positive electrode active material and the second positive electrode active material each include a lithium nickel-based composite oxide. The lithium nickel-based positive electrode active material can provide high capacity and high energy density. The lithium nickel-based composite oxide of the first positive electrode active material and the lithium nickel-based composite oxide of the second positive electrode active material may be the same as or different from each other. For example, they may each be independently represented by Chemical Formula 5.

[Chemical Formula 5] $\quad\quad Li_{a5}Ni_{x5}M^5_{y5}M^6_{z5}O_{2-b5}X_{b5}$

In Chemical Formula 5, $0.9 \leq a5 \leq 1.2$, $0.3 \leq x5 < 1$, $0 < y5 \leq 0.7$, $0 \leq z5 \leq 0.7$, $0.9 \leq x5+y5+z5 \leq 1.1$, and $0 \leq b5 \leq 0.1$, $M^5$ and $M^6$ are different elements and are each independently at least of Al, B, Ba, Ca, Ce, Co, Cr, Cu, Fe, Mg, Mn, Mo, Nb, Si, Sn, Sr, Ti, V, W, Y, Se, Zn, and Zr, and X is at least one element of F, P, and S. In further examples of Chemical Formula 5, $0.6 \leq x5 < 1$, $0 < y5 \leq 0.4$, and $0 \leq z5 \leq 0.4$; or $0.7 < x5 \leq 1$, $0 < y5 \leq 0.3$, and $0 \leq z5 \leq 0.3$; $0.8 \leq x5 < 1$, $0 < y5 \leq 0.2$, and $0 \leq z5 \leq 0.2$; or $0.9 \leq x5 < 1$, $0 < y5 \leq 0.1$, and $0 \leq z5 \leq 0.1$.

The lithium nickel-based composite oxide of the first positive electrode active material and the lithium nickel-based composite oxide of the second positive electrode active material may each independently be a lithium nickel-cobalt-based composite oxide represented by Chemical Formula 6.

[Chemical Formula 6] $\quad Li_{a6}Ni_{x6}Co_{y6}M^7_{z6}O_{2-b6}X_{b6}$

In Chemical Formula 6, $0.9 \leq a6 \leq 1.8$, $0.3 \leq x6 < 1$, $0 < y6 \leq 0.7$, $0 \leq z6 \leq 0.7$, $0.9 \leq x6+y6+z6 \leq 1.1$, and $0 \leq b6 \leq 0.1$, $M^7$ is at least one of Al, B, Ba, Ca, Ce, Cr, Cu, Fe, Mg, Mn, Mo, Nb, Si, Sn, Sr, Ti, V, W, Y, Se, Zn, and Zr, and X is at least one element of F, P, and S.

The lithium nickel-based composite oxide of the first positive electrode active material and the lithium nickel-based composite oxide of the second positive electrode active material may each independently be, as a specific example, a lithium nickel-cobalt-based composite oxide represented by Chemical Formula 7, a lithium nickel-cobalt-manganese-based composite oxide, a lithium nickel-cobalt-aluminum-based composite oxide, or a lithium nickel-cobalt-aluminum-manganese-based composite oxide.

[Chemical Formula 7] $\quad Li_{a7}Ni_{,7}Co_{y7}M^8_{z7}M^9_{w7}O_{2-b7}X_{b7}$

In Chemical Formula 7, $0.9 \leq a7 \leq 1.8$, $0.3 \leq x7 \leq 0.98$, $0.01 \leq y7 \leq 0.69$, $0.01 \leq z7 \leq 0.69$, $0 \leq w7 \leq 0.69$, $0.9 \leq x7+y7+z7+w7 \leq 1.1$, and $0 \leq b7 \leq 0.1$, $M^8$ is Al, Mn, or a combination thereof, $M^9$ is at least one of B, Ba, Ca, Ce, Cr, Cu, Fe, Mg, Mo, Nb, Si, Sn, Sr, Ti, V, W, Y, Se, Zn, and Zr, and X is at least one element of F, P, and S.

In examples, the first positive electrode active material may include a lithium nickel-cobalt-aluminum-based composite oxide, which means an oxide including lithium, nickel, cobalt, and aluminum, and optionally further including other elements, and may be expressed as Ni-Co-Al, or NCA.

The lithium nickel-cobalt-aluminum-based composite oxide of the first positive electrode active material may be represented by Chemical Formula 1.

[Chemical Formula 1] $\quad Li_{a1}Ni_{x1}CO_{y1}Al_{z1}M^1_{w1}O_{2-b1}X_{b1}$

In Chemical Formula 1, $0.95 a1 \leq 1.2$, $0.7 \leq x1 < 1$, $0 < y1 < 0.3$, $0 < z1 < 0.3$, $0 \leq w1 < 0.3$, $0.9 \leq x1+y1+z1+w1 \leq 1.1$, and $0 \leq b1 \leq 0.1$, $M^1$ is at least one of B, Ba, Ca, Ce, Cr, Cu, Fe, Mg, Mo, Nb, Si, Sn, Sr, Ti, V, W, Y, Se, Zn, and Zr, and X is at least one element of F, P, and S. In further examples of Chemical Formula 1, $0.7 \leq x1 \leq 0.98$, $0.01 \leq y1 \leq 0.29$, $0.01 \leq z1 \leq 0.29$, and $0 \leq w1 \leq 0.28$; $0.8 \leq x1 \leq 0.98$, $0.01 \leq y1 \leq 0.19$, $0.01 \leq z1 \leq 0.19$, and $0 \leq w1 \leq 0.18$; or $0.9 \leq x1 \leq 0.98$, $0.01 \leq y1 \leq 0.09$, $0.01 \leq z1 \leq 0.09$, and $0 \leq w1 \leq 0.08$.

As another example, the second positive electrode active material may include a lithium nickel-cobalt-aluminum-manganese-based composite oxide, which means an oxide including lithium, nickel, cobalt, aluminum, and manganese, and optionally further including other elements, and may be expressed as Ni-Co-Al-Mn, or NCAM.

The lithium nickel-cobalt-aluminum-manganese-based composite oxide of the second positive electrode active material may be represented by Chemical Formula 2.

[Chemical Formula 2] $\quad Li a_2Ni_{x2}Co_{y2}Al_{z2}Mn_{w2}M^2_{v2}O_{2-b2}X_{b2}$

In Chemical Formula 2, $0.9 \leq a2 \leq 1.2$, $0.7 \leq x2 < 1$, $0 < y2 < 0.3$, $0 < z2 < 0.3$, $0 < w2 < 0.3$, $0 \leq v2 < 0.3$, $0.9 \leq x2+y2+z2+w2+v2 \leq 1.1$, and $0 \leq b2 \leq 0.1$, $M^2$ is at least one of B, Ba, Ca, Ce, Cr, Cu, Fe, Mg, Mo, Nb, Si, Sn, Sr, Ti, V, W, Y, Se, Zn, and Zr, and X is at least one element of F, P, and S. In further examples of Chemical Formula 2, $0.7 \leq x2 \leq 0.979$, $0.01 \leq y2 \leq 0.289$, $0.001 \leq z2 \leq 0.289$, $0.01 \leq w2 \leq 0.289$, and $0 \leq v2 \leq 0.279$; $0.8 \leq x2 \leq 0.979$, $0.01 \leq y2 \leq 0.189$, $0.001 \leq z2 50.189$, $0.01 \leq w2 \leq 0.189$, and $0 \leq v2 \leq 0.179$; or $0.9 \leq x2 \leq 0.979$, $0.01 \leq y2 \leq 0.089$, $0.001 \leq z2 \leq 0.089$, $0.01 \leq w2 \leq 0.089$, and $0 \leq v2 \leq 0.079$.

The amount of nickel in the lithium nickel-based composite oxide may be greater than or equal to 30 mol%, for example greater than or equal to 40 mol%, greater than or equal to 50 mol%, greater than or equal to 60 mol%, greater than or equal to 70 mol%, greater than or equal to 80 mol%, or greater than or equal to 90 mol% and less than or equal to 99.9 mol%, or less than or equal to 99 mol% based on 100 mol% of the metal excluding lithium.

Generally, as the amount of nickel in the positive electrode active material is increased, cation mixing in which $Ni^{2+}$ ions take lithium sites also increases and capacity decreases. Or, since diffusion of lithium ions is hindered by impurities such as NiO and the like, a battery cycle-life may be deteriorated. Further, the positive electrode active material has a side reaction with an electrolyte due to the structural collapse and cracks according to charges and discharges, which may decrease the battery cycle-life and cause a safety problem. To solve these problems, when boron is coated only on the surface of a positive electrode active material in a conventional method, the boron acts as resistance and decreases capacity and deteriorates a cycle-life. But the positive electrode active material prepared according to embodiments of the present disclosure addresses problems associated with high nickel concentration by coating an appropriate amount of boron on the first positive electrode active material, and, even if a high nickel-based active material is used, high capacity is realized while cycle-life characteristics are improved without deteriorating initial discharge capacity.

## First Coating Layer of First Positive Electrode Active Material

The first positive electrode active material includes a boron-containing first coating layer. The first coating layer may be expressed as a type of buffer layer, and the first coating layer may play a role in effectively suppressing side reactions between the first lithium nickel-based composite oxide and the sulfide-based solid electrolyte.

In the past, when boron was coated on a positive electrode active material, it was common to use a method of mixing boron raw material into a lithium metal-based composite oxide in a wet or dry manner and then heat treating the mixture. However, there is a problem with this method in that boron acts as resistance on the surface of the positive electrode active material, which worsens the capacity and cycle-life. On the other hand, according to embodiments of the present disclosure, the first positive electrode active material coated with a boron-containing compound may be obtained by a method such as mixing a first nickel-based composite hydroxide in which primary particles are arranged radially and a lithium raw material, adding a boron raw material, and performing heat treatment. In such an embodiment, a first lithium nickel-based composite oxide in which primary particles are arranged radially is obtained, and an appropriate amount of boron is stably coated on the surface of the core particle of the first positive electrode active material. As such, boron no longer acts as a resistance, the structural stability of the first positive electrode active material is secured, and problems due to contact between the first positive electrode active material and the electrolyte are suppressed so that the capacity characteristics and long-term cycle-life characteristics of the battery are improved.

Nickel-based positive electrode active materials may experience structural collapse and cation mixing phenomenon due to the formation of NiO and other substances on a surface as a result of repeated charge/discharge cycles, which may cause gas generation or deterioration of cycle-life characteristics. In addition, since the positive electrode active material crack due to the repeated charges and discharges, there may be increased side reactions of the positive electrode active material with an electrolyte solution, which reduces battery capacity and deteriorates cycle-life characteristics. However, according to some example embodiments, an appropriate amount of a boron-containing compound is stably coated on the core particle of the first positive electrode active material, and a first coating layer and a grain boundary boron coating portion or a boron doping layer are simultaneously formed on the core particle of the first positive electrode active material such that the detachment of oxygen atoms from the surface of the first positive electrode active material is prevented, structural collapse is suppressed, and breakage due to repeated charge and discharge is suppressed. Further, movement of lithium ions in an all-solid-state battery can be made smoother by the boron-containing compound present on the surface of the core particle of the first positive electrode active material, thereby improving rate capability.

The first coating layer may contain a boron-containing compound, and may include, for example, boron oxide, lithium boron oxide (lithium borate), or a combination thereof. Further, the first coating layer may include, for example, $B_2O_2$, $B_2O_3$, $B_4O_3$, $B_4O_5$, $LiBO_2$, $Li_3B_7O_{12}$, $Li_6B_4O_9$, $Li_3B_{11}O_{18}$, $Li_2B_4O_7$, $Li_3BO_3$, or a combination thereof. The first coating layer may exist in the form of a continuous film on the surface of the secondary particles of the first positive electrode active material or may be coated in the form of an island.

In the first positive electrode active material, an amount of boron based on 100 mol% of a total metal excluding lithium may be 0.01 mol% to 0.5 mol%, for example 0.01 mol% to 0.4 mol%, 0.01 mol% to 0.3 mol%, or 0.1 mol% to 0.3 mol%. Additionally, in the first positive electrode active material, the amount of boron based on 100 wt% of a total metal excluding lithium may be 0.01 wt% to 0.5 wt%, for example 0.01 wt% to 0.3 wt%, 0.01 wt% to 0.2 wt%, or 0.01 wt% to 0.1 wt%. The boron amount may be measured, for example, through ICP (Inductively Coupled Plasma) emission spectrometry. When boron is coated in such an amount, it does not act as a resistance and the battery capacity does not decrease, the diffusion of lithium ions into the positive electrode active material becomes easier, the initial charge/discharge efficiency is improved, and problems caused by repeated charge and discharge are suppressed, thereby improving long cycle-life characteristics of the battery.

## Grain Boundary Boron Coating Portion

The first positive electrode active material may have the surface and be formed of secondary particles, with internal portions of the secondary particles being coated with a boron-containing compound. The coating layer on the surfaces of the secondary particles coated with the boron-containing compound may be referred to as a first coating layer, and the internal portions of the secondary particles coated with the boron-containing compound may be referred to as grain boundary boron coating portions.

The first positive electrode active material in the form of secondary particles having a radial structure may further include a grain boundary boron coating portion on the surfaces of primary particles forming the secondary particles, as well as a first coating layer on the surfaces of the secondary particles. For example, in the first positive electrode active material, boron may be coated along the interfaces of the primary particles in the internal portions of the secondary particles. Here, the internal portions of the secondary particle means the entire inside and not the surface, and may be, for example, the entire inside from a depth of approximately 1 $\mu$m from the outer surface. The internal portion may also be expressed as a portion that is not in contact with distilled water when washing the secondary particles of the first positive electrode active material with distilled water. When a boron-containing compound is coated on the surfaces of the secondary particles and the internal grain boundary surfaces of the first positive electrode active material, boron does not act as resistance and structural collapse or breakage of the positive electrode active material due to charge and discharge can be effectively suppressed.

the amount of boron present on the surfaces of a secondary particles may be greater than the boron amount present at the internal grain boundaries, for example, by four times or more. For example, the weight of boron in the first coating layer may be at least four times the weight of boron in the grain boundary boron coating portion. A ratio of the weight of boron in the first coating layer to the weight of boron in the grain boundary boron coating portion may be 70:30 to 98:2, for example, 75:25 to 97:3, or 80:20 to 95:5. In this case, boron can play a role in improving performance without acting as a resistance in the positive electrode active material, and the boron can simultaneously improve the capacity characteristics and cycle-life characteristics of solid-state rechargeable batteries.

Based on 100 wt% of the first positive electrode active material, the amount of boron in the first coating layer may be 0.02 wt% to 0.5 wt%, 0.03 wt% to 0.4 wt%, 0.04 wt% to 0.3 wt%, or 0.05 wt% to 0.2 wt%. Based on 100 wt% of the first positive electrode active material, the amount of boron in the grain boundary boron coating portions may be 0.001 wt% to 0.05 wt%, 0.001 wt% to 0.04 wt%, 0.002 wt% to 0.03 wt%, or 0.003 wt% to 0.02 wt%. When the amount of boron in the first coating layer and the grain boundary boron coating portion is within the above range, both the capacity characteristics and cycle-life characteristics of the all-solid-state rechargeable battery can be improved. Here, the boron amount may be measured through ICP emission spectroscopy analysis of the positive electrode active material, the boron amount in the grain boundary boron coating portion may refer to the amount of boron remaining in the first positive electrode active material after washing, and the boron amount of the first coating layer may refer to a difference between the amount of boron before washing and the boron amount after washing.

Boron Doping Layer

According to some example embodiments, the first positive electrode active material in the form of secondary particles having a radial structure may further include a boron doping layer located inside the primary particles, exposed on the surfaces of the secondary particle, and present in the form of a layer along the perimeters of the secondary particles. The boron doping layer may be disposed in the secondary particles within a depth range of 10 nm from the outer surfaces of the primary particles exposed to the surfaces of the secondary particles. When the outer surface of the primary particles exposed to the surfaces of the secondary particles is 0 nm, the doping layer may be present within a depth range of 0 nm to 10 nm from the surfaces. In other words, the boron doping layer may be said to be located within the depth range of 10 nm from the surfaces of the secondary particles. When the surfaces of the secondary particles is 0 nm, the doping layer may be present within a depth range of 0 nm to 10 nm from the surfaces. Such a boron doping layer may improve a structural stability of the positive electrode active material, and thus may improve cycle-life characteristics of the all-solid-state rechargeable battery.

The boron doping layer may be disposed, for example, within a depth range of 9 nm, within a depth range of 8 nm, within a depth range of 7 nm, within a depth range of 6 nm, within a depth range of 5 nm, within a depth range of 4 nm, within a depth range of 3 nm, or within a depth range of 2.5 nm from the outer surfaces of the primary particles exposed to the surfaces of the secondary particles. This boron doping layer is distinct from the first coating layer or the grain boundary boron coating portion, and it is believed that the boron doping layer contributes to the structural stability of the positive electrode active material.

The boron doping layer means is provided in the form of a layer along the surface perimeters of the secondary particles and is distinguished from boron being evenly doped within the primary particles and also from being coated on the surfaces of the secondary particles. A thickness of the boron doping layer may be less than or equal to 10 nm, for example, 1 nm to 10 nm, or 2 nm to 8 nm.

**Second Coating Layer of First Positive Electrode Active Material and Third Coating Layer of Second Positive Electrode Active Material**

The first positive electrode active material includes a zirconium-containing second coating layer, and the second positive electrode active material includes a zirconium-containing third coating layer. The zirconium-containing coating layers (the second coating layer containing zirconium and the third coating layer containing zirconium) may be expressed as a type of buffer layer and may play a role in effectively suppressing side reactions between the lithium nickel-based composite oxide and the sulfide-based solid electrolyte.

The zirconium-containing coating layer may be formed through a dry coating method. Such a zirconium-containing coating layer may include a mixed phase of $ZrO_2$ and $Li_6Zr_2O_7$. that is, the zirconium-containing coating layer includes $ZrO_2$ with relatively high crystallinity and $Li_6Zr_2O_7$ with lower crystallinity. The presence or absence of $ZrO_2$ and $Li_6Zr_2O_7$ can be identified, for example, through the Inverse Fast Fourier Transform (FFT) or FFT rotation pattern of the High-Resolution Transmission Electron Microscopy (HRTEM) image for the positive electrode active material. The coating layer containing $ZrO_2$ and $Li_6Zr_2O_7$ may facilitate the movement of lithium ions on the surfaces of each of the first positive electrode active material and the second positive electrode active material, improve the structural stability of the positive electrode active material, and lower the reactivity with the sulfide-based solid electrolyte, thereby improving the interfacial resistance.

The zirconium-containing coating layer may further include an amorphous phase. For example, the zirconium-containing coating layer may include a $ZrO_2$ crystal phase, a $Li_6Zr_2O_7$ crystal phase, and a Zr-containing amorphous phase. Such a zirconium-containing coating layer may improve lithium ionic conductivity and reduce the interfacial resistance between the positive electrode active material and the solid electrolyte while also having a thin and uniform thickness.

The zirconium-containing coating layer may be in a form of a continuous film or in a form of islands. The zirconium-containing coating layer may be prepared by a dry coating method (described below), and even then, the zirconium-containing coating can be well formed with a uniform thickness on the surface of the positive electrode active material without being agglomerated or localized. For example, a zirconium-containing coating layer may exist in the form of a continuous and uniform film on the surfaces of secondary particles or on the surfaces of a single particles. With this configuration, the capacity characteristics and cycle-life characteristics of the positive electrode active material may be further improved.

The thickness of the zirconium-containing coating layer in each of the first positive electrode active material and the second positive electrode active material may be 5 nm to 300 nm, for example 5 nm to 200 nm, 5 nm to 100 nm, 5 nm to 80 nm, or 10 nm to 50 nm. By providing a zirconium-containing coating layer in these thickness ranges, the increase in resistance due to the coating may be suppressed, the positive electrode active material may be effectively protected, and the ionic conductivity may be improved, thereby improving the electrochemical characteristics of the battery.

A zirconium-containing coating layer may be formed with a uniform thickness without being locally present or agglomerated on the surface of secondary particles or single particles of the positive electrode active material. For example, relative to the diameter of the positive active material, the deviation in the thickness of the zirconium-containing coating layer may be less than or equal to 20%, less than or equal to 10%, or less than or equal to 5%, and may be less than or equal to 100 nm, less than or equal to 50 nm, or less than or equal to 30 nm. Here, the deviation in coating layer thickness refers to the deviation of the thickness of a coating layer within one positive electrode active material particle. For example, the deviation of the coating layer thickness may be calculated by measuring the thickness of 10 points in an electron microscope image of the cross-section of a single positive electrode active material particle to calculate an arithmetic average, and then dividing the absolute value of the difference between one data and the arithmetic mean value by the arithmetic mean value and multiplying by 100. that the deviation or standard deviation of the coating layer thickness satisfies the above range means that a coating layer of uniform thickness is formed on the surface of the positive electrode active material particle. Accordingly, structural stability of the positive electrode active material is improved, side reactions with the solid electrolyte are effectively suppressed, and an increase in resistance or a decrease in capacity due to coating can be minimized. For example, the standard deviation of the thickness of the coating layer may refer to a value calculated according to the following equation, by measuring the thickness of the coating layer at 10 randomly selected points in an electron microscope image (e.g., SEM or STEM) of a cross-section of the negative electrode.

$$\sigma = \sqrt{\frac{1}{n}\sum_{i=1}^{n}(x_i - x_A)^2}$$

Here, xi represents the thickness (e.g., in $\mu$m) at each measurement point, $x_A$ represents the arithmetic mean of the 10 measured values, n represents the number of measurement points (e.g., 10), and $\sigma$ represents the standard deviation of the thickness of the coating layer.

The total amount of Zr in the second coating layer of the first positive electrode active material and the third coating layer of the second positive electrode active material may be 0.1 parts by mole to 0.6 parts by mole, for example, 0.1 parts by mole to 0.5 parts by mole, or 0.1 parts by mole to 0.4 parts by mole based on 100 parts by moles based on 100 parts by mole of the total metal, excluding lithium, in the lithium nickel-based composite oxide of the first positive electrode active material and the lithium nickel-based composite oxide of the second positive electrode active material.

The total Zr amount in the second coating layer of the first positive electrode active material and the third coating layer of the second positive electrode active material may be 0.1 wt% to 6 wt%, for example, 0.5 wt% to 6 wt%, or 1 wt% to 5.5 wt%, based on 100 wt% of the positive electrode active material. Further, the total Zr amount in the second coating layer of the first positive electrode active material and the third coating layer of the second positive electrode active material may be 0.1 at% to 10 at%, for example, 0.1 at% to 8 at%, 0.1 at% to 7 at%, 0.5 at% to 6.5 at%, or 1 at% to 6 at%, based on 100 at% of the total metal excluding lithium in the total positive electrode active material.

When the total Zr amount of the zirconium-containing coating layer is in these ranges, the zirconium-containing coating layer may sufficiently protect the positive electrode active material, without acting as a resistance and may exist with a uniform thickness without being agglomerated or locally present on the surfaces of positive electrode active material particles, thereby effectively improving cycle-life characteristics without reducing the capacity of the positive electrode active material. If the Zr content is excessive, the coating layer may become thicker and act as a resistance layer, which may reduce the charge/discharge capacity of the battery. On the other hand, if the Zr content is too small, the buffer function may not be sufficiently performed, which may reduce cycle-life characteristics of the positive electrode active material.

## Method of Preparing Positive Electrode Active Material for All-solid-state Rechargeable Battery

The method of preparing a positive electrode active material for an all-solid-state rechargeable battery includes: (i) mixing a first positive electrode active material precursor in a form of secondary particles including a first nickel-based composite hydroxide and being formed by agglomeration of primary particles, a lithium raw material, and a boron raw material, to thereby form a mixture, (ii) performing a first heat treatment at a temperature of 650 °C to 850 °C to obtain a boron-coated first preliminary positive electrode active material, (iii) dry mixing the boron-coated first preliminary positive electrode active material, a second preliminary positive electrode active material including a second lithium nickel-based composite oxide and being the form of single particles, and a zirconium raw material, to thereby form a dry mixture, and (iv) performing a second heat treatment on the dry mixture to obtain a positive electrode active material.

In step (ii), the first nickel-based composite hydroxide and the lithium raw material react through a first heat treatment process to form secondary particles containing a lithium nickel-based composite oxide, and a boron-containing compound is coated on the surfaces and internal portions (internal grain boundaries) of the secondary particles to prepare a first preliminary positive electrode active material. That is, a first preliminary positive electrode active material having a first coating layer formed through step (ii) may be prepared.

Previously, when coating boron on a positive electrode active material, a method has been generally used in which a lithium raw material is mixed into a nickel-based composite hydroxide, heat-treated to prepare a lithium nickel-based composite oxide, and then a boron raw material is mixed into the lithium nickel-based composite oxide in a wet or dry manner and heat-treated again. However, with such a method, there is a problem that the boron attached to the surface of the positive electrode active material acted as resistance, thereby reducing the capacity and cycle-life. But the positive electrode active material prepared according to embodiments of the present disclosure has a high pellet density and a high initial discharge capacity so that the capacity per volume of the battery is significantly increased, the initial charge/-discharge efficiency is high, and the room temperature and high temperature cycle-life characteristics may be improved.

In the above preparation method, the first nickel-based composite hydroxide, which is a first positive electrode active material precursor, may be formed by agglomeration of primary particles, and at least a portion of the primary particles may be in the form of secondary particles arranged radially. The average particle diameter of the secondary particles may be 8 $\mu$m to 25 $\mu$m, 10 $\mu$m to 25 $\mu$m, 11 $\mu$m to 20 $\mu$m, or 12 $\mu$m to 18 $\mu$m. Here, the average particle diameter of the secondary particles may be obtained by selecting 20 particles at random in the SEM image of the first positive electrode active material precursor, measuring the particle diameter (diameter, long axis, or length of the long axis) to obtain the particle size distribution, and taking the diameter ($D_{50}$) of particles with a cumulative volume of 50 volume% as the average particle diameter in the particle size distribution.

The first positive electrode active material precursor may be prepared through a co-precipitation reaction. That is, a composite metal raw material is prepared by mixing metal raw materials such as nickel raw materials. A complexing agent and a pH controlling agent are added to the mixture to proceed with the co-precipitation reaction while controlling the pH of the mixture to produce a first nickel-based composite hydroxide of the desired composition. The complexing agent plays a role in controlling the reaction rate of precipitate formation in the co-precipitation reaction. The complexing agent may be, for example, ammonium hydroxide ($NH_4OH$) or citric acid. The pH controlling agent may be, for example, sodium hydroxide (NaOH), sodium carbonate ($Na_2CO_3$), sodium oxalate ($Na_2C_2O_4$), and the like. The pH of the mixture may be, for example, adjusted to range from 10 to 13.

The co-precipitation reaction may proceed in several steps, for example, in 2 steps, 3 steps, or 4 steps. At each step, the concentration of the complexing agent, the input rates of the metal raw materials, the pH control range, reaction temperature, reaction time, or stirring power may be adjusted differently. Through such an adjustment, it is possible to prepare a first positive electrode active material precursor in the form of secondary particles in which at least a portion of the primary particles are radially arranged and to also to prepare secondary particles with different internal and external shapes.

The first positive electrode active material precursor having a radial structure can be, for example, made by the following method. The method of preparing the first positive electrode active material precursor may include a first process, a second process, and a third process for forming a core, an intermediate layer, and a shell in that order. In the first process, the complexing agent, pH controlling agent, and metal raw materials are added to the reactor and reacted. At this time, the concentration of the complexing agent may be 0.1 M to 0.7 M and the input amount thereof may be 6 mL/min to 12 mL/min. The concentrations of the metal raw materials may be 0.1 M to 3.5 M and the input amounts thereof may be 50 mL/min to 100 mL/min. Subsequently, in the second process, the complexing agent, pH controlling agent, and metal raw materials are further added. At this time, the concentration of the complexing agent may be 0.3 M to 1.0 M and the input amount thereof may be 8 mL/min to 15 mL/min. The concentrations of the metal raw materials may be 0.1 M to 3.5 M and the input amounts thereof may be 60 mL/min to 120 mL/min. Then, in the third process, the concentrations and input amounts of the complexing agent and metal raw material are further increased or kept the same, so that particle growth rate does not decrease. At this time, the concentration of the complexing agent may be 0.35 M to 1.0 M and the input amount thereof may be 12 mL/min to 20 mL/min. The concentration of the metal raw materials may be 0.1 M to 2.5 M and the input amounts thereof may be 70 mL/min to 150 mL/min. In the first to third processes, pH may be adjusted between 10 and 12.

The first nickel-based composite hydroxide may be represented by, for example, Chemical Formula 11.

$$[\text{Chemical Formula 11}] \qquad Ni_{x11}M^{11}{}_{y11}M^{12}{}_{z11}(OH)_2$$

In Chemical Formula 11, $0.3 \leq x11 \leq 1$, $0 \leq y11 \leq 0.7$, $0 \leq z11 \leq 0.7$, $0.9 \leq x11+y11+z11 \leq 1.1$, and $M^{11}$ and $M^{12}$ are each independently at least one of Al, B, Ba, Ca, Ce, Co, Cr, Cu, Fe, Mg, Mn, Mo, Nb, Si, Sn, Sr, Ti, V, W, Y, Se, Zn, and Zr.

As a more specific example, the first nickel-based composite hydroxide may be a nickel-cobalt-aluminum-based composite hydroxide represented by Chemical Formula 12.

$$[\text{Chemical Formula 12}] \qquad Ni_{x12}Co_{y12}Al_{z12}M^{13}{}_{w12}(OH)_2$$

In Chemical Formula 12, $0.7 \leq x12 < 1$, $0 < y12 < 0.3$, $0 < z12 < 0.3$, $0 \leq w12 < 0.3$, $0.9 \leq x12+y12+z12+w12 \leq 1.1$, and $M^{13}$ is at least one of B, Ba, Ca, Ce, Cr, Cu, Fe, Mg, Mn, Mo, Nb, Si, Sn, Sr, Ti, V, W, Y, Se, Zn, and Zr.

In the first nickel-based composite hydroxide, at least some of the primary particles may have a plate shape. The secondary particles may have a radial arrangement structure in which the long axes of the plate-shaped primary particles are directed toward the surface of the secondary particles.

The lithium raw material may be, for example, $Li_2CO_3$, LiOH, LiF, a hydrate or an anhydrate thereof, or a combination thereof. Additionally, the lithium raw material may be mixed so that the molar ratio of lithium to the total metal in the first nickel-based composite hydroxide may be 0.8 to 1, 0.8 to 0.995, 0.9 to 0.995, or 0.950 to 0.995. By adjusting the molar ratio of lithium within the above ranges, a first preliminary positive electrode active material in which a first coating layer is effectively formed may be obtained.

The boron raw material is a boron-containing compound, and may include, for example, $H_3BO_3$, $HBO_2$, $B_2O_3$, $C_6H_5B(OH)_2$, $(C_6H_5O)_3B$, $[CH_3(CH_2)_3O]_3B$, $(C_3H_7O)_3B$, $C_3H_9B_3O_6$, $C_{13}H_{19}BO_3$, or a combination thereof. Based on 100 parts by moles of the total amount of metal excluding lithium in the first nickel-based composite hydroxide, an amount of the boron raw material may be 0.01 parts by mole to 0.5 parts by mole, for example, 0.01 parts by mole to 0.3 parts by mole, or 0.1 parts by mole to 0.3 parts by mole. When the amount of the boron raw material is in these ranges, boron in the first positive electrode active material may play a role in improving the performance of the all-solid-state rechargeable battery without acting as a resistance, And, accordingly, the capacity may be improved and cycle-life characteristics may be improved. If the amount of the boron raw material becomes excessive, boron may act as resistance in the first positive electrode active material, reducing the capacity and cycle-life of the battery.

The first heat treatment may be, for example, performed at a temperature of 650 °C to 850 °C, or 690 °C to 780 °C. The first heat treatment may be performed for 5 hours to 25 hours, for example, for 5 hours to 20 hours. In this case, the first preliminary positive electrode active material stably coated with a boron-containing compound may be obtained, through which a positive electrode active material with high capacity and high energy density may be prepared. In a conventional coating method of mixing lithium nickel-based composite oxide and boron raw material and performing heat treatment, it is common to perform heat treatment at a much lower temperature, for example, below 600 °C, but in embodiments of the present disclosure, the heat treatment is performed at a higher temperature, for example 650 °C to 850 °C, which is different from the conventional method. By heat-treating in this temperature range, a first lithium nickel-based composite oxide in the form of secondary particles having a radial structure is obtained while simultaneously coating the first lithium nickel-based composite oxide with a boron-containing compound. The prepared first preliminary positive electrode active material may simultaneously improve the initial discharge capacity, initial efficiency, and cycle-life characteristics without the resistance-increasing effect due to boron. The prepared first preliminary positive electrode active material also may improve capacity per volume of the battery by increasing the pellet density.

The first heat treatment may include a temperature increase step and a temperature maintenance step, and the temperature increase time may be set to be longer than the temperature maintenance time. For example, the temperature increase time may be 6 hours to 16 hours and the temperature maintenance time may be 1 hour to 9 hours. Thus, the temperature increase time may be longer than the temperature maintenance time.

In the first heat treatment, the temperature increase time may be, for example, 6 hours to 15 hours, 6 hours to 14 hours, 6 hours to 13 hours, or 7 hours to 12 hours. The temperature maintenance time may be 2 hours to 9 hours, or 3 to 8 hours. The ratio of (temperature increase time):(temperature maintenance time) may be 1.1:1 to 10:1, for example, 1.1:1 to 8:1, 1.1:1 to 6:1, 1.1:1 to 5:1, or 1.1:1 to 4:1.

By controlling the first heat treatment profile in this way, a high-efficiency radial secondary particle-shaped first positive electrode active material may be effectively prepared. And an appropriate amount of boron-containing compound may be stably coated on the core particle of the first positive electrode active material.

In the steps (iii) and (iv), the second preliminary positive electrode active material including the second lithium nickel-based composite oxide and having a single particle form may be prepared by, for example, mixing the second nickel-based composite hydroxide and a lithium raw material, performing heat treatment, and then, optionally, performing a process such as pulverization. Here, the heat treatment may be performed, for example, at 800 °C to 1100 °C, or 800 °C to 1000 °C, for 1 hour to 25 hours or 5 hours to 20 hours in an oxidizing gas atmosphere. The pulverization may be performed to obtain a single particle form and is distinct from crushing. The pulverization can be performed using a device such as a jet mill. The second nickel-based composite hydroxide is the same as or different from the aforementioned first nickel-based composite hydroxide, first nickel-based composite hydroxide and the second nickel-based composite hydroxide may each independently be represented by Chemical Formula 11 or Chemical Formula 12. For example, the second lithium nickel-based composite oxide may be represented by the aforementioned Chemical Formula 2. The average particle diameter $(D_{50})$ of the single particles including the second lithium nickel-based composite oxide may be 2 $\mu$m to 8 $\mu$m, for example about 2 $\mu$m to about 7 $\mu$m, or 2 $\mu$m to 5 $\mu$m.

A mixing ratio of the boron-coated first preliminary positive electrode active material and the second preliminary positive electrode active material may be a weight ratio of 60:40 to 95:5, for example, 70:30 to 90:10. As such, a positive electrode active material with high pellet density and energy density, high capacity, and excellent cycle-life characteristics may be prepared.

In some embodiments, a method is provided for forming a zirconium-containing coating layer on both large and small particles by dry mixing the first preliminary positive electrode active material, a second preliminary positive electrode active material, and a zirconium raw material and performing a second heat treatment. The method applies a dry coating method, does not use organic solvents or expensive coating raw materials, and can use existing equipment. Thus, the method is economical and environmentally friendly, thereby making mass production feasible.

According to the above method, a positive electrode active material having a coating layer including $ZrO_2$ and $Li_6Zr_2O_7$ formed on both the large and small particles may be synthesized, and a coating layer having an appropriate content and thickness may be synthesized in a good form, thereby preparing a positive electrode active material having improved capacity characteristics and cycle-life characteristics. These positive electrode active materials have low reactivity with sulfide-based solid electrolyte particles and low interfacial resistance, so the materials may be applied to all-solid-state rechargeable batteries to improve capacity characteristics, rate capability, and cycle-life characteristics.

The zirconium raw material is a compound containing the zirconium element, and any compound capable of dry mixing may be used without limitation. The zirconium raw material may be, for example, a zirconium-containing oxide, a zirconium-containing sulfide, a zirconium-containing carbonate, a zirconium-containing hydroxide, and the like. For example, the zirconium raw material may be zirconium oxide, zirconium sulfide, zirconium carbonate, zirconium hydroxide, or a combination thereof.

The zirconium raw material may be mixed in an amount of 0.1 parts by mole to 0.6 parts by mole, for example, 0.1 parts by mole to 0.5 parts by mole, or 0.1 parts by mole to 0.4 parts by mole based on 100 parts by moles of the total metal, excluding lithium, in the total of the first preliminary positive electrode active material and the second preliminary positive electrode active material. When the zirconium raw material is input within this range, a coating layer having an appropriate amount and thickness can be formed, which can sufficiently perform the role of protecting the positive electrode active material and may exist with a uniform thickness without being agglomerated or locally present on the surface of the secondary particles or single particles. If the amount of the zirconium raw material is excessive, the coating layer may become thicker and act as a resistance layer, which may reduce the charge/discharge capacity of the positive electrode active material. If the amount of the zirconium raw material is too small, it may not sufficiently perform the buffer function, which may reduce cycle-life characteristics of the positive electrode active material.

The zirconium raw material may be in a form of nanoparticles. More specifically, the zirconium raw material in the form of particles may have the average particle diameter $(D_{50})$ of 10 nm to 500 nm, 30 nm to 500 nm, or 50 nm to 500 nm. As a specific example, the zirconium raw material is particles including zirconium oxide, and the average particle diameter $(D_{50})$ of the particles may be 10 nm to 500 nm. In this case, it may be advantageous to synthesize a coating layer of appropriate thickness.

Dry mixing means mixing without a solvent and can be understood as a solid-phase coating method. This is distinguished from wet coating or liquid coating. By utilizing the dry coating, coating layers (a second coating layer and a third coating layer) including a mixed phase of $ZrO_2$ and $Li_6Zr_2O_7$ may be easily formed.

In step (iii), the coating layer including the mixed phase of $ZrO_2$ and $Li_6Zr_2O_7$ and having a uniform thickness may be formed by performing a second heat treatment after dry mixing. The second heat treatment temperature may be 420 °C to 580 °C, for example 430 °C to 570 °C, 440 °C to 560 °C, 450 °C to 550 °C, or 460 °C to 530 °C. By performing a second heat treatment in these temperature ranges, it is possible to synthesize a zirconium-containing coating layer having an appropriate crystal phase, and this coating layer can sufficiently perform a buffer function without acting as a resistance, thereby improving the capacity characteristics and cycle-life characteristics of the positive electrode active material. If the second heat treatment temperature is less than 420 °C, the zirconium-containing coating layer may not form an appropriate crystal phase and may only act as resistance, which may deteriorate the capacity characteristics of the positive electrode active material. If the second heat treatment temperature exceeds 580 °C, the coating materials may be agglomerated or be coated only locally, reducing the buffer effect. In addition, zirconium may be absorbed into the positive electrode active material, thereby failing to function as a buffer and causing deterioration in the capacity characteristics and cycle-life characteristics.

The second heat treatment may be performed in an oxygen atmosphere, for example, for 5 hours to 25 hours, or for 10 hours to 20 hours. Under these conditions, a good coating layer may be formed.

When dry mixing the first preliminary positive electrode active material, the second preliminary positive electrode active material and the zirconium raw material in step (iii), the lithium raw material may be mixed together. The lithium raw material is a lithium-containing compound and any such material can be used without limitation as long as dry mixing is possible. The lithium raw material may be, for example, $Li_2CO_3$, LiOH, LiF, a hydrate thereof, an anhydrate thereof, or a combination thereof. In some example embodiments, anhydrous lithium hydroxide may be used as the lithium raw material. The lithium raw material may be mixed in an amount of greater than 1 part by mole and less than or equal to 4 parts by moles, for example, greater than 1 part by mole and less than or equal to 3 parts by moles, or greater than or equal to 2 parts by moles and less than or equal to 4 parts by moles per 1 part by mole of the zirconium raw material. When lithium raw materials are mixed together and heat-treated, it is advantageous to form a lithium zirconium oxide, for example, $Li_6Zr_2O_7$ crystal phase, in the coating layer, which can increase lithium ionic conductivity and it is advantageous to obtain a coating layer of an appropriate thickness in a good form.

In step (iii), the mixing may be performed through three or more dry mixing processes having different mixing speeds. For example, the dry mixing process may include a low-speed operation, a medium-speed operation, and a high-speed operation. The low-speed section means an operation with the lowest mixing speed, the high-speed section means an operation with the highest mixing speed, and the medium-speed operation means an operation with a mixing speed between the low-speed operation and the high-speed operation.

The dry mixing may be performed dry using a Henschel mixer, and the low-speed operation may be performed at a speed of 100 rpm to 500 rpm, the medium-speed operation may be performed at a speed of 600 rpm to 1000 rpm, and the high-speed operation may be performed at a speed of 1100 rpm to 2000 rpm. With such mixing speeds a second coating layer and a third coating layer having a good form and an appropriate and uniform thickness may be obtained while containing a mixed phase of $ZrO_2$ and $Li_6Zr_2O_7$ as lithium zirconium oxide in the second coating layer and third coating layer.

In the dry mixing, the time of the medium-speed operation may be longer than the times of the low-speed operation and the high-speed operation. For example, the low-speed operation may be performed for 3 to 7 minutes, the medium-speed operation may be performed for 9 to 20 minutes, and the high-speed operation may be performed for 3 to 7 minutes. As such, the second coating layer and the third coating layer may be obtained with a good form and an appropriate and uniform thickness while containing a mixed phase of $ZrO_2$ and $Li_6Zr_2O_7$ as lithium zirconium oxide in the second coating layer.

In the process of preparing a positive electrode active material for an all-solid-state rechargeable battery according to some example embodiments, the order of coating described above is important. During the above preparing process, if the zirconium coating is performed first and then the boron coating is performed, the effects of structural stabilization and performance improvement may not be obtained because the zirconium coating is performed in a state where the boron grain boundary coating portion and the boron doping layer are not formed during the zirconium coating step.

Positive Electrode

In some example embodiments, a positive electrode including the aforementioned positive electrode active material and a sulfide-based solid electrolyte is provided. The positive electrode may include a first positive electrode active material, a second positive electrode active material, and a sulfide-based solid electrolyte.

The positive electrode may be referred to as a positive electrode for a all-solid-state rechargeable battery, and may be expressed as, for example, a positive electrode for an all-solid-state rechargeable battery. The positive electrode has low resistance, and may realize not only initial charge/discharge capacity and efficiency, but also very high capacity per volume, excellent cycle-life characteristics, and high-rate capability.

The positive electrode may include a positive electrode current collector and a positive electrode active material layer on the positive electrode current collector. And the positive electrode active material layer may include the aforementioned positive electrode active material and sulfide-based solid electrolyte.

In the positive electrode, based on 100 wt% of the total of the first positive electrode active material, the second positive electrode active material, and the sulfide-based solid electrolyte, the sulfide-based solid electrolyte may be included in an amount of 1 wt% to 35 wt%, 5 wt% to 30 wt%, 10 wt% to 25 wt%, 10 wt% to 20 wt%, or 11 wt% to 15 wt%. When the sulfide-based solid electrolyte in the positive electrode is in these ranges, the overall performance of the all-solid-state rechargeable battery can be improved by improving the ionic conductivity while minimizing the capacity degradation of the positive electrode.

Sulfide-based Solid Electrolyte

The sulfide-based solid electrolyte included in the positive electrode may be in the form of particles. The average particle diameter ($D_{50}$) of the particles may be 0.1 $\mu$m to 5 $\mu$m, for example, 0.1 $\mu$m to 3 $\mu$m, 0.1 $\mu$m to 2 $\mu$m, 0.5 $\mu$m to 1.9 $\mu$m, or 0.8 $\mu$m to 1 $\mu$m. The particle size of the sulfide-based solid electrolyte included in the positive electrode may be the same as or smaller than the particle size of the solid electrolyte included in the solid electrolyte layer (described below). By appropriately adjusting the size of the sulfide-based solid electrolyte particles included in the positive electrode, the capacity and energy density of the positive electrode can be increased and the ionic conductivity can be improved. The average particle diameter of the solid electrolyte may be measured from a microscope image, for example, by measuring the sizes of 20 particles in a scanning electron microscope image to obtain a particle size distribution and then calculating $D_{50}$ from the size distribution.

The composition of the sulfide-based solid electrolyte included in the positive electrode may be the same as or different from the solid electrolyte included in the solid electrolyte layer (described below). The sulfide-based solid electrolyte included in the positive electrode may be, for example, an argyrodite-type sulfide-based solid electrolyte. Descriptions on sulfide-based solid electrolytes and the descriptions on argyrodite-type sulfide-based solid electrolytes are the same as the sulfide-based solid electrolytes included in the solid electrolyte layer described below.

Binder and Conductive Material

The positive electrode active material layer may include at least one of a binder and a conductive material in addition to the aforementioned positive electrode active material and sulfide-based solid electrolyte.

The binder improves binding properties of positive electrode active material particles with one another and with a positive electrode current collector. Examples the binder include polyvinyl alcohol, carboxylmethyl cellulose, hydroxypropyl cellulose, diacetyl cellulose, polyvinylchloride, carboxylated polyvinylchloride, polyvinylfluoride, an ethylene oxide-containing polymer, polyvinylpyrrolidone, polyurethane, polytetrafluoroethylene, polyvinylidene fluoride, polyethylene, polypropylene, a styrene-butadiene rubber, an acrylated styrene-butadiene rubber, an epoxy resin, nylon, and the like. But the present disclosure is not limited to these examples. Based on 100 wt% of the total positive electrode active material layer, an amount of the binder may be 0.1 wt% to 5 wt%, or 0.1 wt% to 3 wt%.

The conductive material is included to provide electrode conductivity and any electrically conductive material may be used that does not cause a chemical change in a secondary battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

An amount of the conductive material in the positive electrode active material layer may be 0.1 wt% to 5 wt% or 0.1 wt% to 3 wt% based on the total weight of the positive electrode active material layer.

An aluminum foil or stainless steel (SUS) foil may be used as the current collector of the positive electrode. But the present disclosure is not limited to these examples.

**All-solid-state Rechargeable Battery**

Embodiments of the present disclosure provide an all-solid-state rechargeable battery including the aforementioned positive electrode, a negative electrode, and a solid electrolyte layer between the positive electrode and negative electrode. The all-solid-state rechargeable battery includes not only a solid-state rechargeable battery in which all components are made of solids, but also a semi-solid rechargeable battery that includes some liquid components such as an electrolyte solution.

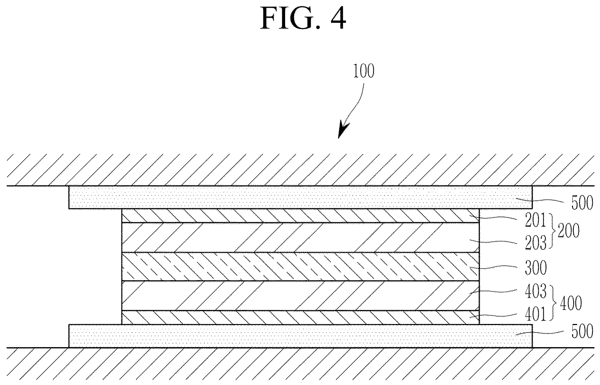

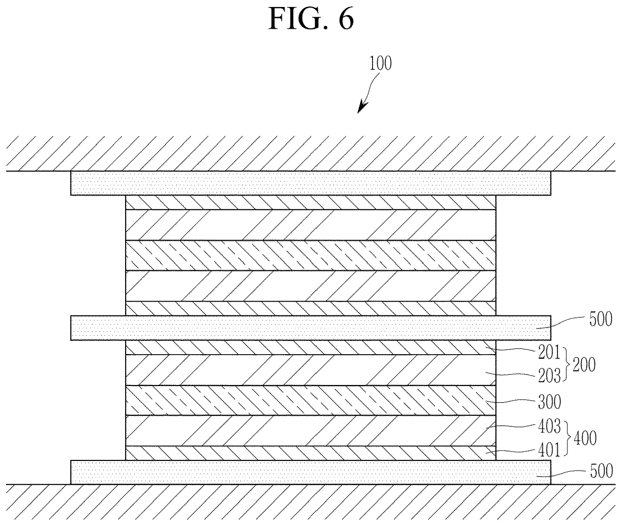

FIG. 4 is a cross-sectional view schematically of an all-solid-state rechargeable battery according to some example embodiments. Referring to FIG. 4, the all-solid-state rechargeable battery 100 may include an electrode assembly housed in a battery case, with the electrode assembly being formed as a stack of a negative electrode 400 including a negative electrode current collector 401 and a negative electrode active material layer 403, a solid electrolyte layer 300, and a positive electrode 200 including a positive electrode active material layer 203 and a positive electrode current collector 201. The all-solid-state rechargeable battery 100 may further include at least one elastic layer 500 on the outside of at least one of the positive electrode 200 and the negative electrode 400. FIG. 4 shows one electrode assembly including the negative electrode 400, the solid electrolyte layer 300, and the positive electrode 200. In other embodiments such as the one illustrated in FIG. 6, two or more electrode assemblies may be stacked to make an all-solid-state rechargeable battery.

**Negative Electrode**

The negative electrode 400 may include a negative electrode current collector 401, and a negative electrode active material layer 403 on the negative electrode current collector 401. The negative electrode active material layer 403 may include a negative electrode active material and may further include a binder and/or a conductive material.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be irregular, or sheet, flake, spherical, or fiber shaped natural graphite or artificial graphite. The amorphous carbon may be a soft carbon, a hard carbon, a mesophase pitch carbonization product, calcined coke, and the like.

The lithium metal alloy may include an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0<x\leq2$), a Si-Q alloy, or a combination thereof. In the formula Si-Q, Q is an element selected from an alkali metal, an alkaline-earth metal, a Group 13 element, a Group 14 element (excluding Si), a Group 15 element, a Group 16 element, a transition metal, a rare earth element, and a combination thereof. The Sn-based negative electrode active material may be Sn, $SnO_x$ ($0<x\leq2$), a Sn-based alloy, or a combination thereof.

The silicon-carbon composite may be a composite of silicon and amorphous carbon. The silicon-carbon composite may be in the form of silicon particles and amorphous carbon coated on the surfaces of the silicon particles. For example, the silicon carbon composite may include secondary particles (cores) in which silicon primary particles are assembled and an amorphous carbon coating layer (shell) on the surfaces of the secondary particles. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer on the surfaces of the cores.

The Si-based negative electrode active material or Sn-based negative electrode active material may be mixed with the carbon-based negative electrode active material.

In the negative electrode active material layer, the negative electrode active material may be included in an amount of 95 wt% to 99.8 wt% based on the total weight of the negative electrode active material layer.

The negative electrode active material layer may optionally include a binder and/or a conductive material. An amount of the binder in the negative electrode active material layer may be 0.1 wt% to 5 wt% based on the total weight of the negative electrode active material layer. In addition, when the conductive material is included, the negative electrode active material layer may include 90 wt% to 99.8 wt% of the negative electrode active material, 0.1 wt% to 5 wt% of the binder, and 0.1 wt% to 5 wt% of the conductive material.

The negative electrode binder serves to adhere the negative electrode active material particles to each other and also to adhere the negative electrode active material to the negative electrode current collector. The binder may be a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber. The dry binder may be, for example, polytetrafluoroethylene, polyvinylidene fluoride, a polyvinylidene fluoride-hexafluoropropylene copolymer, polyethylene oxide, or a combination thereof.

The negative electrode conductive material is included to provide electrode conductivity and any electrically conductive material may be used that does not cause a chemical change in a secondary battery. Examples of the conductive material include a carbon-based material such as natural graphite, artificial graphite, carbon black, acetylene black, Ketjen black, a carbon fiber, a carbon nanofiber, a carbon nanotube, and the like; a metal-based material of a metal powder or a metal fiber including copper, nickel, aluminum, silver, and the like; a conductive polymer such as a polyphenylene derivative; or a mixture thereof.

The negative electrode current collector may be a copper foil, nickel foil, stainless steel foil, titanium foil, nickel foam, copper foam, a polymer substrate coated with a conductive metal, or a combination thereof.

Precipitation-type Negative Electrode

The negative electrode for an all-solid-state rechargeable battery may be a precipitation-type negative electrode. A precipitation-type negative electrode does not include a negative electrode active material during battery assembly, but may refer to a negative electrode in which lithium metal is precipitated or electrodeposited on the negative electrode during battery charging, thereby serving as a negative electrode active material.

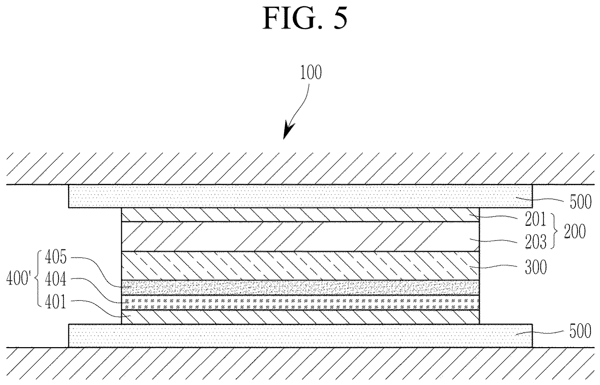

FIG. 5 is a cross-sectional view of an all-solid-state rechargeable battery including a precipitation-type negative electrode. Referring to FIG. 5, the precipitation-type negative electrode 400' may include a negative electrode current collector 401 and a negative electrode coating layer 405 on the negative electrode current collector. In an all-solid-state rechargeable battery having such a precipitation-type negative electrode 400', initial charging begins in the absence of negative electrode active material. During charging, high-density lithium metal is precipitated or electrodeposited between the negative electrode current collector 401 and the negative electrode coating layer 405 or on the negative electrode coating layer 405 to form a lithium metal layer 404, that functions as a negative electrode active material. Accordingly, in an all-solid-state rechargeable battery that has been charged at least once, the precipitation-type negative electrode 400' may include, for example, a negative electrode current collector 401, a lithium metal layer 404 on the negative electrode current collector 401, and a negative electrode coating layer 405 on the metal layer. The lithium metal layer 404 may be a layer in which lithium metal is precipitated during the charging process of the battery, and may be referred to as a metal layer, lithium layer, lithium electrodeposition layer, or negative electrode active material layer. The negative electrode coating layer 405 may be referred to as a lithium electrodeposition inducing layer or a negative electrode catalyst layer, and may include a lithiophilic metal, a carbon material, or a combination thereof.

The lithiophilic metal may include, for example, gold, platinum, palladium, silicon, silver, aluminum, bismuth, copper, germanium, indium, magnesium, nickel, tin, zinc, or a combination thereof, and the lithiophilic metal may be composed of one or more of these or various types of alloys. When the lithiophilic metal is in a particle form, its average particle diameter ($D_{50}$) may be less than or equal to 4 $\mu$m, for example, 10 nm to 4 $\mu$m, 10 nm to 1 $\mu$m, or 10 nm to 600 nm. That is, the lithiophilic metal may be in a form of nanoparticles having an average particle diameter of several to several hundred nanometers.

The carbon material may be, for example, crystalline carbon, amorphous carbon, or a combination thereof. The crystalline carbon may be, for example, natural graphite, artificial graphite, mesophase carbon microbeads, or a combination thereof. The amorphous carbon may be, for example, carbon black, activated carbon, acetylene black, Denka black, Ketjen black, or a combination thereof.

When the negative electrode coating layer 405 includes both the lithiophilic metal and carbon material, the mixing ratio of the lithiophilic metal and the carbon material may be, for example, a weight ratio of 1:10 to 2:1. In this configuration, precipitation of lithium metal can be effectively promoted and the characteristics of the all-solid-state rechargeable battery can be improved. The negative electrode coating layer 405 may include a carbon material on which the lithiophilic metal is supported, or it may include a mixture of the lithiophilic metal particles and carbon material particles.

The negative electrode coating layer 405 may include the lithiophilic metal and amorphous carbon, and, as such, it can effectively promote precipitation of lithium metal.

Supported Compound

The negative electrode coating layer 405 may include a compound in which a lithiophilic metal is supported on a carbon material. The supported compound is distinguished from a simple mixture of lithiophilic metal and carbon material. When the negative electrode coating layer 405 includes a supported compound, the lithium metal layer 404 can be formed more uniformly. Further, the reversibility of precipitation and dissociation of lithium can be improved, thereby improving the cycle-life characteristics of the all-solid-state rechargeable battery. Here, the lithiophilic metal may be the same as described above, and the carbon material may be, for example, amorphous carbon.

The amorphous carbon material may be single particles, an assembly having the form of secondary particles in which primary particles are assembled, or a combination of single particles and the assembly. When the amorphous carbon material is single particles, an average particle diameter may be less than or equal to 100 nm, for example, a nano size of 10 nm to 100 nm. When the amorphous carbon material is an assembly, a particle diameter of the primary particles may be 20 nm to 100 nm, and a particle diameter of the secondary particles may be 1 $\mu$m to 20 $\mu$m.

A particle diameter of the primary particles of the assembly of the assembly-shaped amorphous carbon material may be greater than or equal to 20 nm, greater than or equal to 30 nm, greater than or equal to 40 nm, greater than or equal to 50 nm, greater than or equal to 60 nm, greater than or equal to 70 nm, greater than or equal to 80 nm, or greater than or equal to 90 nm and may be less than or equal to 100 nm, less than or equal to 90 nm, less than or equal to 80 nm, less than or equal to 70 nm, less than or equal to 60 nm, less than or equal to 50 nm, less than or equal to 40 nm, or less than or equal to 30 nm. The shapes of the primary particles may be spherical, elliptical, plate-shaped, and combinations thereof. The shapes of the primary particles may be spherical, elliptical, or a combination thereof.

A particle diameter of the secondary particles (assembly) of the assembly-shaped amorphous carbon material may be greater than or equal to 1 $\mu$m, greater than or equal to 3 $\mu$m, greater than or equal to 5 $\mu$m, greater than or equal to 7 $\mu$m, greater than or equal to 10 $\mu$m, or greater than or equal to 15 $\mu$m, and less than or equal to 20 $\mu$m, less than or equal to 15 $\mu$m, less than or equal to 10 $\mu$m, less than or equal to 7 $\mu$m, less than or equal to 5 $\mu$m, or less than or equal to 3 $\mu$m.

Based on 100 wt% of the compound in which the lithiophilic metal is supported on the carbon material, the lithiophilic metal may be included in an amount of 3 wt% to 40 wt%, for example, 3 wt% to 30 wt%, 4 wt% to 25 wt%, 5 wt% to 20 wt%, or 5 wt% to 15 wt%. Based on 100 wt% of the compound in which the lithiophilic metal is supported on the carbon material, the carbon material may be included in an amount of 60 wt% to 97 wt%, for example 70 wt% to 97 wt%, 75 wt% to 96 wt%, 80 wt% to 95 wt%, or 85 wt% to 95 wt%. When the amount of the lithiophilic metal and carbon material is in these ranges, a uniform lithium metal layer can be effectively formed during charging.

In some example embodiments, the carbon material and the lithiophilic metal may be chemically bonded by sulfur. In other words, the carbon material and the lithiophilic metal are not simply physically mixed, but rather the carbon material and the lithiophilic metal may be chemically bonded to each other. In this case, the bonding strength between the carbon material and the lithiophilic metal is excellent, and the problem of the carbon material and the lithiophilic metal being separated from each other during the mixing process can be effectively prevented. Additionally, agglomeration of lithiophilic metals is prevented and they can be uniformly dispersed within the negative electrode coating layer, thereby providing uniform current distribution within the negative electrode uniform and leading to uniform precipitation of lithium metal.

When a carbon material and a lithiophilic metal are chemically bonded by sulfur, a peak related to the bond between the lithiophilic metal and sulfur can be confirmed in the X-ray photoelectron spectroscopy (XPS) spectrum. For example, when the lithiophilic metal includes Ag, a peak can be confirmed in the range of 160 eV to 162 eV, which is the Ag-S binding energy, in the S2p spectrum obtained by XPS analysis.

A composite in which a carbon material and a lithiophilic metal are chemically bonded by sulfur can be prepared by mixing the carbon material and sulfur-containing raw materials in a dry or wet manner, optionally heat-treating the mixture, and then supporting and heat-treating the lithiophilic metal.

A method of supporting a lithiophilic metal may include, for example, mixing a mixture of a carbon material and a sulfur-containing raw material, a lithiophilic metal compound, and a reducing agent in a solvent. The solvent may include, for example, water, ethanol, glycerol, benzene, xylene, or a combination thereof. The reducing agent may include $NaBH_4$, ascorbic acid, trisodium citrate, ethylene glycol, or a combination thereof. The lithiophilic metal compound may be a nitrate, sulfate, perchlorate, etc. containing a lithiophilic metal, and may include, for example, $AgNO_3$, $Ag_2SO_4$, $AgClO_4$, or a combination thereof.

The heat treatment after lithiophilic metal loading can be performed at a temperature at which the sulfur-containing raw material can be decomposed and removed. For example, the heat treatment temperature may be 100 °C to 500 °C, 150 °C to 500 °C, 200 °C to 450 °C, or 200 °C to 400 °C. Specifically, when using a thiol compound as a sulfur-containing raw material, the heat treatment temperature may be 100 °C to 400 °C. The heat treatment may be performed for 2 hours to 20 hours in an atmosphere of nitrogen, argon, or a combination thereof.

A thickness of the negative electrode coating layer 405 may be, for example, 100 nm to 40 $\mu$m, or 500 nm to 30 $\mu$m, or 1 $\mu$m to 20 $\mu$m. If the negative electrode coating layer 405 is in these thickness ranges, a lithium metal layer of uniform thickness can be effectively formed during charging.

The negative electrode coating layer 405 may further include a binder, for example, a conductive binder. Additionally, the negative electrode coating layer 405 may further include an additive such as a filler, a dispersant, an ion conductive agent, and the like.

The binder of the negative electrode coating layer 405 may include a non-aqueous binder, an aqueous binder, a dry binder, or a combination thereof.

The non-aqueous binder may include polyvinylchloride, carboxylated polyvinylchloride, polyvinylfluoride, ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be Na, K, or Li.

The dry binder may be a polymer material capable of becoming fiber. The dry binder may be, for example, polytetrafluoroethylene, polyvinylidene fluoride, a polyvinylidene fluoride-hexafluoropropylene copolymer, polyethylene oxide, or a combination thereof.

The binder may be included in an amount of 0.1 to 5 wt%, 0.1 to 3 wt%, or 0.5 to 2 wt% based on 100 wt% of the negative electrode coating layer 405.

Lithium Metal Layer

The negative electrode according to embodiments of the present disclosure may a type of precipitation-type negative electrode, and an all-solid-state rechargeable battery including the these types of negative electrodes begins initial charging in the absence of a negative electrode active material. During charging, a lithium metal layer 404 is formed by precipitation or electrodeposition of high-density lithium metal between the negative electrode current collector and the negative electrode coating layer or on the negative electrode coating layer, which can serve as a negative electrode active material. Thus, an all-solid-state rechargeable battery that has been charged at least once may include, for example, a negative electrode current collector 401, a lithium metal layer 404 on the negative electrode current collector, and a negative electrode coating layer 405 on the lithium metal layer. The lithium metal layer 404 refers to a layer in which lithium ions are precipitated as lithium metal during the charging process of the battery. The lithium metal layer 404 can be expressed as a metal layer, a lithium layer, a lithium electrodeposition layer, or a negative electrode active material layer.

The lithium metal layer 404 may include a lithium metal or a lithium alloy. The lithium alloy may be, for example, a Li-Al alloy, a Li-Sn alloy, a Li-In alloy, a Li-Ag alloy, a Li-Au alloy, a Li-Zn alloy, a Li-Ge alloy, or a Li-Si alloy.

A thickness of the lithium metal layer 404 may be 1 $\mu$m to 500 $\mu$m, 5 $\mu$m to 500 $\mu$m, 5 $\mu$m to 400 $\mu$m, 5 $\mu$m to 300 $\mu$m, or 10 $\mu$m to 200 $\mu$m. If the thickness of the lithium metal layer is too thin, it may not function as a lithium storage layer. If it is too thick, performance may decrease as the battery volume increases.

A lithium metal layer 404 with a uniform and flat thickness can be formed by applying a compound in which the aforementioned lithiophilic metal is supported on a carbon material to the negative electrode coating layer 405. As such, the lithium metal layer 404 formed during charging may have a very uniform thickness and have a small thickness deviation. For example, the deviation of the thickness of the lithium metal layer 404 may be less than or equal to 40%, less than or equal to 30%, less than or equal to 20%, less than or equal to 15%, less than or equal to 10%, or less than or equal to 5%. The deviation of the thickness of the lithium metal layer 404 may be calculated by measuring the thickness of 10 points in an electron microscope image of the cross-section of a negative electrode to calculate an arithmetic average, and then dividing the absolute value of the difference between the thickness at each point and the arithmetic mean value by the arithmetic mean value and multiplying the result by 100. Also, the thickness of the lithium metal layer 404 may be 5 $\mu$m to 80 $\mu$m, and the standard deviation of the thickness may be 0.1 $\mu$m to 20 $\mu$m, 0.1 $\mu$m to 15 $\mu$m, 0.1 $\mu$m to 10 $\mu$m, 0.1 $\mu$m to 5 $\mu$m, or 0.1 $\mu$m to 3 $\mu$m. The standard deviation of the thickness of the lithium metal layer 404 may be calculated by measuring the thickness of 10 points in an electron microscope photograph. If the deviation or standard deviation of the lithium metal layer thickness is in the above ranges, lithium metal may be well precipitated in the form of a film of uniform thickness. Thus, the electrochemical properties of the all-solid-state rechargeable battery can be improved. For example, the standard deviation of the thickness of the lithium metal layer 404 may refer to a value calculated according to the following equation, by measuring the thickness of the lithium metal layer 404 at 10 randomly selected points in an electron microscope image (e.g., SEM or STEM) of a cross-section of the negative electrode.

$$\sigma = \sqrt{\frac{1}{n}\sum_{i=1}^{n}(x_i - x_A)^2}$$

Here, xi represents the thickness (e.g., in $\mu$m) at each measurement point, $x_A$ represents the arithmetic mean of the 10 measured values, n represents the number of measurement points (e.g., 10), and $\sigma$ represents the standard deviation of the thickness of the lithium metal layer 404.

Others

The negative electrode according to some example embodiments may further include a thin film on the surface of the negative electrode current collector 401, that is, between the negative electrode current collector 401 and the negative electrode coating layer 405, or between the negative electrode current collector 401 the lithium metal layer 404. The thin film may include an element capable of forming an alloy with lithium. The element capable of forming an alloy with lithium may be, for example, Al, Ag, Au, Bi, Cu, Ge, In, Mg, Ni, Pd, Pt, Si, Sn, Zn, or a combination thereof. The thin film can further planarize the precipitation form of the lithium metal layer 404 and help form a lithium metal layer 404 having a uniform thickness. The thin film may be formed, for example, in a vacuum deposition method, a sputtering method, a plating method, and the like. The thin film may have, for example, a thickness of 1 nm to 500 nm.

Negative Electrode Current Collector

The negative electrode current collector 401 may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and the negative electrode current collector 410 may be in the form of a foil or sheet. The thickness of the negative electrode current collector 401 may be, for example, 1 $\mu$m to 20 $\mu$m, 5 $\mu$m to 15 $\mu$m, or 7 $\mu$m to 10 $\mu$m.

**Solid Electrolyte Layer**

The solid electrolyte layer 300 may include an inorganic solid electrolyte, for example, a sulfide-based solid electrolyte, an oxide-based solid electrolyte, a halide-based solid electrolyte, etc.

The type or component of the sulfide-based solid electrolyte included in the solid electrolyte layer is not particularly limited. For example, the sulfide-based solid electrolytes may include $Li_2S-P_2S_5$, $Li_2S-P_2S_5-LiX$ (X is a halogen element, for example, I or Cl), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (m and n are integers, respectively, and Z is Ge, Zn, or Ga), $Li_2S-GeS_2$, $Li_2S-SiS_2-Li_3PO_4$, $Li_2S-SiS_2-Li_sMO_q$ (p and q are integers and M is P, Si, Ge, B, Al, Ga, or In), $Li_3PS_4$, $Li_7P_3S_{11}$, $Li_7PS_6$, or a combination thereof. Such a sulfide-based solid electrolyte may be obtained by, for example, mixing $Li_2S$ and $P_2S_5$ in a molar ratio of 50:50 to 90:10 or 50:50 to 80:20 and optionally performing heat treatment on the mixture. Within the above mixing ratio range, a sulfide-based solid electrolyte having excellent ionic conductivity may be prepared. The ionic conductivity may be further improved by adding $SiS_2$, $GeS_2$, $B_2S_3$, and the like as other components thereto.

Mechanical milling or a solution method may be applied as a mixing method of sulfur-containing raw materials for preparing a sulfide-based solid electrolyte. The mechanical milling is performed to make starting materials into particulates by putting the starting materials in a ball mill reactor and vigorously stirring the materials. The solution method may be performed by mixing the starting materials in a solvent to obtain a solid electrolyte as a precipitate. In addition, in the case of heat-treatment after mixing, crystals of the solid electrolyte may be more robust and ionic conductivity may be improved. The heat treatment may be performed at a temperature range of 400 °C to 600 °C, for example 450 °C to 500 °C, or 460 °C to 490 °C, for 5 hours to 30 hours, 10 hours to 24 hours, or 15 hours to 20 hours. When the heat treatment is performed under these conditions, ionic conductivity can be maximized. For example, the sulfide-based solid electrolyte may be prepared by mixing sulfur-containing raw materials and performing heat treatment two or more times. In this case, a sulfide-based solid electrolyte having high ionic conductivity and robustness may be prepared.

The sulfide-based solid electrolyte according to example embodiments of the present disclosure may be prepared by a first heat treatment of mixed sulfur-containing raw materials and firing at 120 °C to 350 °C and then a second heat treatment of the mixture and firing the same at 350 °C to 800 °C. The first heat treatment and the second heat treatment may be performed in an inert gas and nitrogen atmosphere, respectively. The first heat treatment may be performed for 1 hour to 10 hours, and the second heat treatment may be performed for 5 hours to 20 hours. Small raw materials may be milled in the first heat treatment, and a final solid electrolyte can be synthesized through the second heat treatment. Through such two or more heat treatments, a sulfide-based solid electrolyte having high ionic conductivity and high performance can be obtained, and the solid electrolyte may be suitable for mass production. The temperature of the first heat treatment may be, for example, 150 °C to 330 °C, or 200 °C to 300 °C. The temperature of the second heat treatment may be, for example, 380 °C to 700 °C, or 400 °C to 600 °C.

The sulfide-based solid electrolyte may include argyrodite-type sulfide. The argyrodite-type sulfide-based solid electrolyte particles may have high ionic conductivity close to the range of $10^{-4}$ to $10^{-2}$ S/cm, which is the ionic conductivity of general liquid electrolytes at room temperature. The argyrodite-type sulfide-based solid electrolyte particles may form an intimate bond between the positive electrode active material and the solid electrolyte.

The argyrodite-type sulfide-based solid electrolyte may include a compound represented by Chemical Formula 21.

[Chemical Formula 21] $(Li_a M^{21}{}_b M^{22}{}_c)(P_d M^{23}{}_e)(S_f M^{24}{}_g)X_h$

In Chemical Formula 21, $4 \leq a \leq 8$, $M^{21}$ is Mg, Ca, Cu, Ag, or a combination thereof, $0 \leq b < 0.5$, $M^{22}$ is Na, K, or a combination thereof, $0 \leq c < 0.5$, $M^{23}$ is Sn, Zn, Si, Sb, Ge, or a combination thereof, $0 \leq d < 4$, $0 \leq e < 1$, $M^{24}$ is N, O, $SO_n$, or a combination thereof, $1.5 \leq n \leq 5$, $3 \leq f \leq 12$, $0 \leq g < 2$, X is F, Cl, Br, I, or a combination thereof, and $0 < h \leq 2$. In further examples of Chemical Formula 21, the $M^{21}$ element may be necessarily included, and in such cases, it may be expressed as $0 < b < 0.5$. In Chemical Formula 21, $M^{23}$ may be understood as an element substituted for P and may be $0 < e < 1$. In Chemical Formula 21, $M^{24}$ is substituted for S and, for example, may be $0 < g < 2$, and f (a ratio of S) may be, for example, $3 \leq f \leq 7$. When $M^{24}$ is $SO_n$, $SO_n$ may be, for example $S_4O_6$, $S_3O_6$, $S_2O_3$, $S_2O_4$, $S_2O_5$, $S_2O_6$, $S_2O_7$, $S_2O_3$, $SO_4$, or $SO_5$, and in particular, may be $SO_4$. ,In other examples of Chemical Formula 21, $a+b+c+h=7$, $d+e=1$, and $f+g+h=6$.

As a specific example, the argyrodite-type sulfide-based solid electrolyte particles may include $Li_6PS_5Cl$, $Li_6PS_5Br$, $Li_{5.8}PS_{4.8}Cl_{1.2}$, $Li_{6.2}PS_{5.2}Br_{0.8}$, $Li_{5.75}PS_{4.75}Cl_{1.25}$, $(Li_{5.69}Cu_{0.06})PS_{4.75}Cl_{1.25}$, $(Li_{5.72}CU_{0.03})PS_{4.75}Cl_{1.25}$, $(Li_{5.69}Cu_{0.06})P(S_{4.70}(SO_4)_{0.05})Cl_{1.25}$, $(Li_{5.69}Cu_{0.06})P(S_{4.60}(SO_4)_{0.15})Cl_{1.25}$, $(Li_{5.72}Cu_{0.03})P(S_{4.725}(SO_4)_{0.025})Cl_{1.25}$, $(Li_{5.72}Na_{0.03})P(S_{4.725}(SO_4)_{0.025})Cl_{1.25}$, $Li_{5.75}P(S_{4.725}(SO_4)_{0.025})Cl_{1.25}$, or a combination thereof. But the present disclosure is not limited to these examples.

The argyrodite-type sulfide-based solid electrolyte may be prepared, for example, by mixing lithium sulfide, phosphorus sulfide, and, optionally, lithium halide. Heat treatment may be performed after mixing. The heat treatment may include, for example, two or more heat treatment steps. For example, there may be a first heat treatment in which raw materials are mixed and fired at 120 °C to 350 °C, and a second heat treatment in which the resultant of the first heat treatment is mixed again and fired at 350 °C to 800 °C.

The sulfide-based solid electrolyte may be in the form of particles, and the average particle diameter ($D_{50}$) of the particles may be, for example, 0.1 μm to 1.5 μm, 0.3 μm to 1 μm, or 0.8 μm to 1 μm. The average particle diameter ($D_{50}$) may be measured from an electron microscope image, for example, by measuring the size (diameter or long axis length) of 20 particles in an SEM image to obtain a particle size distribution, and then calculating the diameter of the particles having a cumulative volume of 50 volume% in the distribution. The size of the sulfide-based solid electrolyte in the solid electrolyte layer may be smaller than or equal to the size of the sulfide-based solid electrolyte particles mixed in the positive electrode.

The oxide-based solid electrolyte may include, for example, $Li_{1+x}Ti_{2-x}Al(PO_4)_3$ (LTAP) ($0 \leq x \leq 4$), $Li_{1+x+y}Al_xTi_{2-x}Si_yP_{3-y}O_{12}$ ($0 < x < 2$, $0 \leq y < 3$), $BaTiO_3$, $Pb(Zr,Ti)O_3$ (PZT), $Pb_{1-x}La_xZr_{1-y}Ti_yO_3$ (PLZT) ($0 \leq x < 1$, $0 \leq y < 1$), $PB(Mg_3Nb_{2/3})O_3$-$PbTiO_3$ (PMN-PT), $HfO_2$, $SrTiO_3$, $SnO_2$, $CeO_2$, $Na_2O$, MgO, NiO, CaO, BaO, ZnO, $ZrO_2$, $Y_2O_3$, $Al_2O_3$, $TiO_2$, $SiO_2$, lithium phosphate ($Li_3PO_4$), lithium titanium phosphate ($Li_xTi_y(PO_4)_3$, $0 < x < 2$, $0 < y < 3$), $Li_{1+x+y}(Al, Ga)_x(Ti, Ge)_{2-x}Si_yP_{3-y}O_{12}$ ($0 \leq x \leq 1$, $0 \leq y \leq 1$), lithium lanthanum titanate ($Li_xLa_yTiO_3$, $0 < x < 2$, $0 < y < 3$), $Li_2O$, $LiAlO_2$, $Li_2O$-$Al_2O_3$-$SiO_2$-$P_2O_5$-$TiO_2$-$GeO_2$-based ceramics, Garnet-based ceramics $Li_{3+x}La_3M_2O_{12}$ (wherein M = Te, Nb, or Zr; x is an integer of 1 to 10), or a mixture thereof.

The halide-based solid electrolyte may include a halogen element as a main component, meaning that a ratio of the halide element to all elements constituting the solid electrolyte is 50 mol% or more, 70 mol% or more, 90 mol% or more, or 100 mol%. As an example, the halide-based solid electrolyte may not include a sulfur element.

The halide-based solid electrolyte may include a lithium element, a metal element other than lithium, and a halogen element. The metal element other than lithium may include Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof. The halogen element may be F, Cl, Br, I, or a combination thereof, and in particular, may be Cl, Br, or a combination thereof. The halide-based solid electrolyte may be, for example, represented by $Li_a M_1 X_6$ where M is Al, As, B, Bi, Ca, Cd, Co, Cr, Fe, Ga, Hf, In, Mg, Mn, Ni, Sb, Sc, Sn, Ta, Ti, Y, Zn, Zr, or a combination thereof, X is F, Cl, Br, I, or a combination thereof, and $2 \leq a \leq 3$. The halide-based solid electrolyte may include, for example, $Li_2ZrCl_6$, $Li_{2.7}Y_{0.7}Zr_{0.3}Cl_6$, $Li_{2.5}Y_{0.5}Zr_{0.5}Cl_6$, $Li_{2.5}In_{0.5}Zr_{0.5}Cl_6$, $Li_2In_{0.5}Zr_{0.5}Cl_e$, $Li_3YBr_6$, $Li_3YCl_6$, $Li_3YBr_2Cl_4$, $Li_3YbCl_6$, $Li_{2.6}Hf_{0.4}Yb_{0.6}Cl_6$, or a combination thereof, but is not limited thereto.

An average particle diameter ($D_{50}$) of the solid electrolyte included in the solid electrolyte layer 300 may be larger than an average particle diameter ($D_{50}$) of the solid electrolyte included in the positive electrode 200. With such a configuration, overall performance can be improved by maximizing the energy density of the all-solid-state rechargeable battery and increasing the mobility of lithium ions. For example, the average particle diameter ($D_{50}$) of the sulfide-based solid electrolyte particles included in the positive electrode 200 may be 0.1 $\mu$m to 1.9 $\mu$m, or 0.1 $\mu$m to 1.0 $\mu$m, and the average particle diameter (D50) of the solid electrolyte included in the solid electrolyte layer 300 may be 2.0 $\mu$m to 5.0 $\mu$m, or 2.0 $\mu$m to 4.0 $\mu$m, or 2.5 $\mu$m to 3.5 $\mu$m. When these particle diameter ranges are satisfied, the energy density of the all-solid-state rechargeable battery can be maximized and the transfer of lithium ions is facilitated, thereby suppressing resistance and improving the overall performance of the all-solid-state rechargeable battery. Here, the average particle diameter ($D_{50}$) of the solid electrolyte may be measured through a particle size analyzer using a laser diffraction method.

The solid electrolyte layer 300 may further include a binder in addition to the solid electrolyte. The binder may be a styrene butadiene rubber, polytetrafluoroethylene, polyvinylidene fluoride, polyethylene, an acrylate polymer, or a combination thereof. But the present disclosure is not limited thereto, and any binder used in the art can be used. The acrylate-based polymer may be, for example, butyl acrylate, polyacrylate, polymethacrylate, or a combination thereof.

The solid electrolyte layer 300 may be formed by adding a solid electrolyte to a binder solution, coating it on a base film, and drying it. The solvent for the binder solution may be isobutyryl isobutyrate, xylene, toluene, benzene, hexane, or a combination thereof. Because the solid electrolyte layer forming process is widely known in the art, a detailed description will be omitted.

A thickness of the solid electrolyte layer 300 may be, for example, 10 $\mu$m to 800 $\mu$m.

The solid electrolyte layer 300 may further include an alkali metal salt, and/or an ionic liquid, and/or a conductive polymer.

The alkali metal salt may be, for example, a lithium salt. An amount of the lithium salt in the solid electrolyte layer may be greater than or equal to 1 M, for example, 1 M to 4 M. In such a case, the lithium salt may improve ionic conductivity by improving lithium ion mobility of the solid electrolyte layer.

Lithium salts may be used without particular limitations, and may include, for example, $LiPF_6$, $LiBF_4$, $LiSbF_6$, $LiAsF_6$, $LiClO_4$, $LiAlO_2$, $LiAlCl_4$, $LiPO_2F_2$, LiCl, Lil, LiSCN, $LiN(CN)_2$, lithium bis(oxalato)borate (LiBOB), lithium difluoro (oxalato)borate (LiDFOB), lithium difluorobis(oxalato)phosphate (LiDFBP), lithium bis(trifluoromethane sulfonyl)imide (LiTFSI), lithium bis(fluoro)sulfonyl)imide (LiFSI), lithium bis(pentafluoroethanesulfonyl)imide (LiBETI), lithium trifluoromethane sulfonate, lithium tetrafluoroethane sulfonate, or a combination thereof. As further examples, the lithium salt may be an imide-based lithium salt such as LiTFSI, LiFSI, LiBETI, or a combination thereof. The imide-based lithium salt may maintain or improve ionic conductivity by appropriately maintaining chemical reactivity with the ionic liquid.

The ionic liquid has a melting point below room temperature. As such, the ionic liquid is in a liquid state at room temperature and refers to a salt or room temperature molten salt composed of ions alone.

The ionic liquid may be a compound including at least one cation selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, trizolium-based, and a mixture thereof. The ionic liquid may include at least one anion selected from $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$.

The ionic liquid may be, for example, one or more of N-methyl-N-propylpyrrolidinium bis(trifluoromethanesulfonyl)imide, N-butyl-N-methylpyrrolidium bis(3-trifluoromethylsulfonyl) imide, 1-butyl-3-methylimidazolium bis(trifluoromethylsulfonyl)imide, and 1-ethyl-3-methylimidazolium bis(trifluoromethylsulfonyl)imide, or a combination thereof.

A weight ratio of the solid electrolyte and the ionic liquid in the solid electrolyte layer 300 may be 0.1:99.9 to 90:10, for example, 10:90 to 90:10, 20:80 to 90:10, 30:70 to 90: 10, 40:60 to 90:10, or 50:50 to 90:10. The solid electrolyte layer 300 in these ranges may maintain or improve ionic conductivity by improving the electrochemical contact area with the electrode. Accordingly, the energy density, discharge capacity, rate capability, etc. of the all-solid-state rechargeable battery may be improved.

An all-solid-state rechargeable battery may be a unit cell with a structure of positive electrode/solid electrolyte layer/negative electrode, a bicell with a structure of negative electrode/solid electrolyte layer/positive electrode/solid electrolyte layer/negative electrode, or a stacked battery in which the structure of the unit cell is repeated.

The shape of the all-solid-state rechargeable battery is not particularly limited, and may be, for example, coin-shaped, button-shaped, sheet-shaped, stacked-shaped, cylindrical, flat, etc. The all-solid-state rechargeable battery may also be formed as large batteries used in electric vehicles, etc. For example, the all-solid-state rechargeable battery may be used in hybrid vehicles such as plug-in hybrid electric vehicles (PHEV). In addition, the all-solid-state rechargeable battery may be used in a field requiring a large amount of power storage, for example, in an electric bicycle or a power tool. In addition, the all-solid-state rechargeable battery may be used in various fields such as portable electronic devices.

Examples and comparative examples of the present disclosure are described below. However, the following examples are only examples of the present disclosure, and the present disclosure is not limited to the following examples.

## Example 1

### 1. Preparation of Positive Electrode Active Material

### (1) Preparation of First Nickel-based Composite Hydroxide

A first nickel-based composite hydroxide ($Ni_{0.045}Co_{0.04}Al_{0.015}(OH)_2$), which was a precursor of the first positive electrode active material, was synthesized through the co-precipitation method described below. In the preparing process, metal raw materials such as nickel sulfate ($NiSO_4 \cdot 6H_2O$), cobalt sulfate ($CoSO_4 \cdot 7H_2O$), and sodium aluminum sulfate ($NaAl(SO_4)_2 \cdot 12H_2O$) were dissolved in distilled water as a solvent in a molar ratio of 94.5:4:1.5 to prepare a mixed solution. In addition, in order to form a complex compound, ammonia water ($NH_4OH$) and sodium hydroxide ($NaOH$) as a precipitant were prepared.

[1st step: 2.5 kW/m$^3$, $NH_4OH$ 0.40 M, pH 10.5 to 11.5, reaction time: 6 hours]

First, ammonia water at a concentration of 0.40 M was added to a reactor. The metal raw material and the complexing agent ($NH_4OH$) were added thereto at 85 ml/min and 10 ml/min, respectively, at a stirring power of 2.5 kW/ m$^3$ and a reaction temperature of 50 °C. In order to maintain pH, the reaction proceeded for 6 hours, while adding NaOH thereto. After confirming that the obtained core particles had an average size of 6.5 $\mu$m to 7.5$\mu$m, the 2nd step was performed as follows.

[2nd step: 2.0 kW/m$^3$, $NH_4OH$ 0.45 M, pH 10.5 to 11.5, reaction time: 18 hours]

While maintaining the reaction temperature of 50 °C, after adding the metal raw material and the complexing agent by changing each speed to 85 ml/min and 12 ml/min, the concentration of the complexing agent was adjusted to 0.45 M. In order to maintain pH, while adding NaOH thereto, a reaction proceeded for 18 hours. Here, the stirring power was reduced to 2.0 kW/m$^3$, which was lower than that of the 1st step to perform the reaction. After confirming product particles including a core and an intermediate layer had an average size of 13.5 $\mu$m to 14$\mu$m by this reaction, the 3rd step was performed as follows.

[3rd step: 1.5 kW/m$^3$, $NH_4OH$ 0.45 M, pH 10.5 to 11.5, reaction time: 14 hours]

While maintaining the reaction temperature of 50 °C, each input speed of the metal raw material and the complexing agent and the concentration of the complexing agent were set to be the same as in the 2nd step. In order to maintain pH, the reaction proceeded for 14 hours while NaOH was added. Here, the stirring power was reduced to 1.5 kW/m$^3$, which was lower than that of the 2nd step.

[Post-process]

After washing the resulting material, the material was dried with hot air at about 150 °C for 24 hours to obtain the first nickel-based composite hydroxide ($Ni_{0.945}Co_{0.04}Al_{0.015}(OH)_2$).

### (2) Preparation of Second Lithium Nickel-based Composite Oxide

Second nickel-based composite hydroxide ($Ni_{0.04}Co_{0.04}Al_{0.01}Mn_{0.01}(OH)_2$), a precursor of the second positive electrode active material, was synthesized through a co-precipitation method. As metal raw materials, nickel sulfate ($NiSO_4 \cdot 6H_2O$), cobalt sulfate ($CoSO_4 \cdot 7H_2O$), sodium aluminum sulfate ($NaAl(SO_4)_2 \cdot 12H_2O$), and manganese sulfate ($MnSO_4 \cdot H_2O$) were dissolved in distilled water as a solvent in a molar ratio of 94:4:1:1 to prepare a mixed solution. The subsequent synthesis was the same as the preparation of the first nickel-based composite hydroxide.

The second nickel-based composite hydroxide prepared by the above method and lithium hydroxide were mixed in a molar ratio of 1:1 and heat-treated at 850 °C in an oxygen atmosphere. The second preliminary positive electrode active material as a single-crystal lithium nickel composite oxide ($LiNi_{0.94}Co_{0.04}Al_{0.01}Mn_{0.01}O_2$) was obtained by pulverizing the heat-treated product using an airflow impactor to an average particle diameter ($D_{50}$) of approximately 3 $\mu$m.

### (3) Preparation of First Preliminary Positive Electrode Active Material

LiOH was mixed with the first nickel-based composite hydroxide so that the molar ratio of Li/(Ni+Co+Al) = 0.96 was obtained, and boric acid was mixed so that boron was 0.25 mol% based on the total element excluding Li, O, and H in the mixture. The mixture was put into a kiln, and the temperature was raised to 700 °C for 8 hours in an oxygen atmosphere. This heat treatment was performed by maintaining the maximum temperature of 700 °C for 7 hours, thereby obtaining a first preliminary positive electrode active material.

The obtained first preliminary positive electrode active material was confirmed to be secondary particles including a first lithium nickel-based composite oxide ($Li_{0.9}Ni_{0.945}Co_{0.04}Al_{0.015}O_2$) and having an average particle diameter ($D_{50}$) of approximately 13.8 $\mu$m. From the SEM analysis of the cross-section of the secondary particles, it was confirmed that the secondary particles had an internal portion with an irregular porous structure and an external portion with a radial array structure. In addition, from mass analysis results of Time-of-Flight Secondary Ion Mass Spectrometry (ToF-SIMS), it was confirmed that the first preliminary positive electrode active material was evenly coated with lithium boron oxide, such as $LiBO_2$, on the surfaces of the secondary particles. In addition, from the ICP emission spectroscopy analysis results, the boron amount for 100 wt% of the first preliminary positive electrode active material before washing was 1120 ppm, and the amount of boron for 100 wt% of the first preliminary positive electrode active material after washing was 50 ppm. Boron detected after washing was confirmed to be coated on the internal grain boundaries of secondary particles. The boron removed during the washing process corresponds to the component coated on the surface of the secondary particles and was confirmed to be 1070 ppm (1120 ppm - 50 ppm). The ratio of the weight of boron in the first coating layer and the weight of boron in the grain boundary boron coating portion was calculated to be approximately 95:5. Furthermore, transmission electron microscope electron energy loss spectroscopy (TEM-EELS) analysis was performed from the surface to the internal direction on the cross-section of the secondary particles, and it was confirmed that a boron doping layer was formed in a region corresponding to a depth of 2 nm to 5 nm from the outermost surfaces. That is, it can be seen that a boron doping layer was formed in the internal portions the primary particles that are exposed on the surfaces of the secondary particles.

**(4) Preparation of Mixed Positive Electrode Active Material**

The first preliminary positive electrode active material and a second preliminary positive electrode active material, which was a single-crystal lithium nickel-based composite oxide ($LiNi_{0.94}Co_{0.04}Al_{0.01}Mn_{0.01}O_2$) (second lithium nickel-based composite oxide), were mixed at a weight ratio of 7:3, and 100 parts by mole of the positive electrode active material, with 0.25 parts by mole of zirconium oxide ($ZrO_2$) having a $D_{50}$ of 80 nm, and 0.5 parts by mole of anhydrous lithium hydroxide (LiOH) in a Henschel mixer and to perform coating. The mixer was operated at low, medium, and high speeds to prevent layer separation and ensure even coating. In the low-speed operation, preliminary dispersion was performed at 200 rpm for 5 minutes, in the medium-speed operation, main mixing was performed at 800 rpm for 10 minutes, and in the high-speed operation, high-speed dispersion was performed at 1500 rpm for 5 minutes to strengthen the surface coating. Afterwards, the final positive electrode active material was prepared by heat treatment at 500 °C for 15 hours in an oxygen atmosphere (second heat treatment) to form a coating layer. The crystal phase of the coating layer formed in this way was analyzed using scanning transmission electron microscopy - energy-dispersive X-ray spectroscopy (STEM-EDS) and HRTEM, and it was thereby confirmed that the coating layer included a $ZrO_2$ crystal phase, a $Li_6Zr_2O_7$ crystal phase, and an amorphous phase containing Zr.

In the obtained final positive electrode active material, the first positive electrode active material was a first lithium nickel-based composite oxide ($Li_{0.9}Ni_{0.945}Co_{0.04}Al_{0.015}O_2$) in the form of secondary particles having a radial structure, the surfaces of which were first coated with a boron-containing compound and secondarily coated with a zirconium-containing compound, and the average particle diameter was found to be 13.8 $\mu$m. The second positive electrode active material was a second lithium nickel-based composite oxide ($LiNi_{0.94}Co_{0.04}Al_{0.01}Mn_{0.01}O_2$) with a monolithic structure, with a primary coating on the surface with a zirconium-containing compound, and determined to have an average particle diameter of approximately 3 $\mu$m.

**2. Manufacturing of Positive Electrode**

A positive electrode active material composition was prepared by mixing 85 wt% of a positive electrode active material, 13.5 wt% of an argyrodite-type solid electrolyte ($Li_6PS_5Cl$, $D_{50}=1$ $\mu$m), 1.0 wt% of a polyvinylidene fluoride binder, 0.4 wt% of a carbon nanotube conductive agent, and 0.1 wt% of a dispersant in an isobutyryl isobutyrate (IBIB) solvent. This positive electrode active material composition was coated on the positive electrode current collector and dried to make the positive electrode.

**3. Manufacturing of Solid Electrolyte Layer**

An IBIB solvent including an acrylic binder was added to an argyrodite-type solid electrolyte ($Li_6PS_5Cl$, D50=3 $\mu$m) and mixed. A solvent was added while mixing to adjust the viscosity to an appropriate level to prepare a slurry. The slurry was cast on a release film and dried at room temperature to make a solid electrolyte layer.

#### 4. Manufacturing of Negative Electrode

A catalyst was prepared by mixing carbon black having a primary particle diameter of 30 nm and silver (Ag) having an average particle diameter ($D_{50}$) of 60 nm in a weight ratio of 3:1, and 0.25 g of the catalyst was added to 2 g of an NMP solution including 7 wt% of polyvinylidene fluoride binder and mixed to prepare a negative electrode catalyst layer composition. The composition was coated on a negative electrode current collector and then dried to prepare a precipitation-type negative electrode in which a negative electrode catalyst layer was formed on the current collector.

#### 5. Manufacturing of Final Solid-state Battery Cell

The prepared positive electrode, negative electrode, and solid electrolyte layer were cut, a solid electrolyte layer was stacked on the positive electrode, and then a negative electrode was stacked on the stacked positive electrode and solid electrolyte layers. These were sealed in a pouch shape and subjected to a warm isostatic press (WIP) at a temperature of 80 °C and 500 MPa for 30 minutes to make an all-solid-state rechargeable battery cell.

#### Comparative Example 1

A positive electrode and an all-solid-state rechargeable battery cell were made in the same manner as in Example 1, except that the positive electrode active material was made in the following manner. The final positive electrode active material according to Comparative Example 1 was wet-coated with a buffer layer containing Zr and no boron in the first positive electrode active material.

(3) Preparation of First Preliminary Positive Electrode Active Material according to Comparative Example 1

A first preliminary positive electrode active material was prepared in the same manner as in Example 1, except that boron was not added.

(4) Preparation of Mixed Positive Electrode Active Material according to Comparative Example 1

The first preliminary positive electrode active material according to Comparative Example 1 and the second lithium nickel-based composite oxide were mixed at a weight ratio of 7:3, and the buffer layer was coated using a wet method as follows. Dehydrated 2-propanol, a methanol solution including 10 wt% lithium methoxide, and zirconium isopropoxide were mixed at a molecular ratio (molar ratio) of 200:2:1, and the positive electrode active material was added and dispersed therein. To prevent agglomeration of the positive electrode active material particles, the solvent was evaporated under vacuum at 50 °C while irradiating with ultrasonic waves. The resultant was filtered and heat-treated at 350 °C for 1 hour in an air atmosphere to obtain a positive electrode active material coated with a buffer layer including $Li_2CO_3$, LiOH, and $ZrO_2$ at a concentration of 0.25 wt%.

In the obtained final positive electrode active material, the first positive electrode active material was first lithium nickel-based composite oxide ($Li_{0.9}Ni_{0.945}Co_{0.04}Al_{0.015}O_2$) secondary particles that had radial structures, and the average particle diameter was 13.8 $\mu$m. The second positive electrode active material was a second lithium nickel-based composite oxide ($LiNi_{0.94}Co_{0.04}Al_{0.01}Mn_{0.01}O_2$) having a monolithic structure, with the average particle diameter being approximately 3 $\mu$m.

#### Comparative Example 2

A positive electrode and an all-solid-state rechargeable battery cell were manufactured in the same manner as in Example 1, except that the positive electrode active material was manufactured in the following manner.

(4) Preparation of Mixed Positive Electrode Active Material according to Comparative Example 2

A first nickel-based composite hydroxide and a second lithium nickel-based composite oxide were mixed in a weight ratio of 7:3, LiOH was mixed, so as to satisfy a molar ratio of Li/(Ni+Co+Al) = 0.96 in the relationship between the first nickel-based composite hydroxide and LiOH, and 0.125 mol% of boric acid was mixed based on the total elements except Li, O, and H in the mixture. The mixture was placed in a furnace, and the temperature was increased to 700 °C for 8 hours in an oxygen atmosphere and this heat treatment was performed by maintaining the maximum temperature of 700 °C for 7 hours, thereby obtaining a mixed positive electrode active material.

In the obtained final positive electrode active material, the first positive electrode active material was first lithium nickel-based composite oxide ($Li_{0.9}Ni_{0.945}Co_{0.04}Al_{0.015}O_2$) secondary particles having radial structures, the surfaces of which were coated with a boron-containing compound, and the average particle diameter was 13.8 $\mu$m. The second positive electrode active material was a second lithium nickel-based composite oxide with a monolithic structure, the surface of which is coated with a boron-containing compound, and the average particle diameter was approximately 3 $\mu$m.

**Comparative Example 3**

A positive electrode and an all-solid-state rechargeable battery cell were manufactured in the same manner as in Example 1, except that the second lithium nickel-based composite oxide was not mixed when preparing the mixed positive electrode active material.

The positive electrode active materials and positive electrode designs of Example 1 and Comparative Examples 1 to 3 are summarized in Table 1.

Table 1

|  | positive electrode Active material design | Large particles coating | Final coating | Final coating method |
|---|---|---|---|---|
| Example 1 | large particles + small particles | boron | zirconium | dry |
| Comparative Example 1 | large particles + small particles | - | zirconium | wet |
| Comparative Example 2 | large particles + small particles | - | boron | dry |
| Comparative Example 3 | large particles alone | boron | zirconium | dry |

**Evaluation Example 1: Evaluation of Initial Charge/discharge Capacity of All-Solid-State Rechargeable Battery Cells**

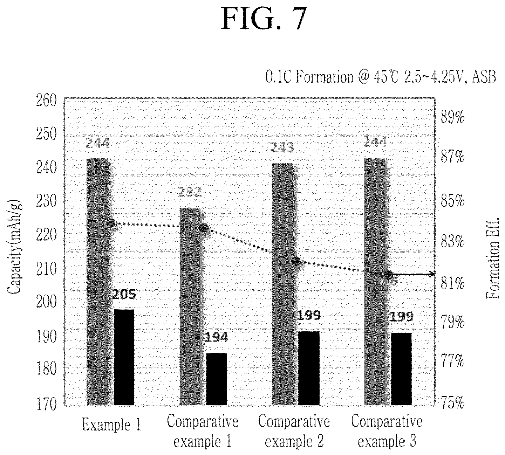

The all-solid-state rechargeable battery cells made in Example 1 and Comparative Examples 1 to 3 were charged at 45 °C with a constant current of 0.1 C to an upper limit voltage of 4.25 V and a constant voltage of 0.05 C, and then were discharged at 0.1 C to a discharge cut-off voltage of 2.5 V to measure the initial charge capacity and the initial discharge capacity. The ratio of the initial discharge capacity to the initial charge capacity was evaluated as the initial efficiency, and the results are shown in Table 2 and FIG. 7.

(Table 2)

|  | Initial Charge capacity (mAh/g) | Initial Discharge capacity (mAh/g) | Initial efficiency (%) |
|---|---|---|---|
| Example 1 | 244.2 | 204.9 | 83.9% |
| Comparative Example 1 | 231.6 | 193.7 | 83.7% |
| Comparative Example 2 | 243.0 | 199.4 | 82.0% |
| Comparative Example 3 | 244.4 | 198.9 | 81.4% |

Referring to Table 2 and FIG. 7, it can be seen that the initial discharge capacity of Example 1, which included a mixture of large particles and small particles, was improved compared to Comparative Example 3, which included only large particles. This is understood to be the result of the mixture of a second lithium nickel-based composite oxide, which was small particles with a monolithic structure, narrowing the space between the positive electrode active material particles and improving the connectivity of the solid electrolyte by efficiently transmitting pressure during the warm isostatic pressing process.

In addition, it can be seen that when the positive electrode active materials for an all-solid-state rechargeable battery were coated with a buffer layer by a wet method, an ion-conducting layer was not formed on the surfaces so that the interfacial resistance between the positive electrode active material and the solid electrolyte increased, resulting in a decrease in both the initial charge capacity and the initial discharge capacity.

Comparative Example 2 showed improved initial charge and discharge capacities by coating boron as a buffer layer using a dry method, as compared to Comparative Example 1 in which zirconium was coated using a conventional wet method. In addition, it can be seen that Example 1, in which the single-crystal particles with high resistance were not coated with boron and the entire body was coated with a zirconium compound having ionic conductivity, exhibited an improved initial discharge capacity, thereby further improving the initial efficiency.

**Evaluation Example 2: Evaluation of Cycle-life Characteristics of All-Solid-State Rechargeable Battery Cells**

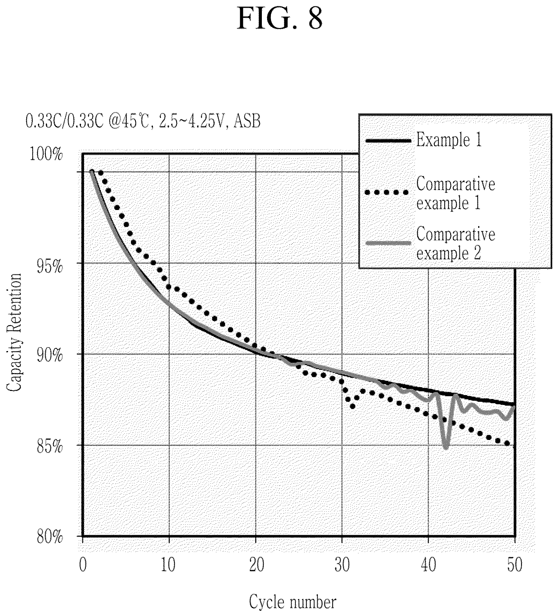

For the battery cells of Example 1 and Comparative Examples 1 to 3, after initial charge and discharge as in Evaluation Example 1, charging at 0.33 C and discharging at 0.33 C were repeated in the voltage range of 2.5 V to 4.25 V at 45 °C. The initial discharge capacity and 50-cycle discharge capacity were measured. The capacity retention rate (cycle-life characteristics), which was the ratio of the 50-cycle discharge capacity to the initial discharge capacity, was evaluated, and the results are shown in Table 3 and FIG. 8.

Table 3

|  | Initial discharge capacity(mAh/g) | 50th discharge capacity(mAh/g) | Discharge capacity retention rate (%) |
|---|---|---|---|
| Example 1 | 170.8 | 148.9 | 87.2% |
| Comparative Example 1 | 152.9 | 129.8 | 84.9% |
| Comparative Example 2 | 161.4 | 140.6 | 87.1% |
| Comparative Example 3 | 161.9 | 146.6 | 90.5% |

Referring to Table 3 and FIG. 8, it can be seen that the initial cycle-life capacity of Example 1, which include a mixture of large particles and small particles, was improved compared to using large particles alone as in Comparative Example 3. This is understood to be a result of improved connectivity of the solid electrolyte due to efficient pressure transmission during the warm isostatic pressing process as described in Evaluation Example 1.

In Comparative Example 1, the coated zirconium acted as a resistive layer, but in Comparative Example 2, it was understood that the initial capacity and capacity retention rate were improved due to the coating in the form of $LiBO_2$ having ionic conductivity. In addition, in Example 1, the polycrystalline large particles were fist coated with a boron, and then coated with a zirconium-containing compound having ionic conductivity. Thus, the reaction with the solid electrolyte was suppressed, and the high-resistance single-crystal small particles were coated with a zirconium-containing compound having high ionic conductivity, thereby maintaining a higher initial capacity than Comparative Examples 1 and 2.

**Evaluation Example 3: SEM Evaluation**

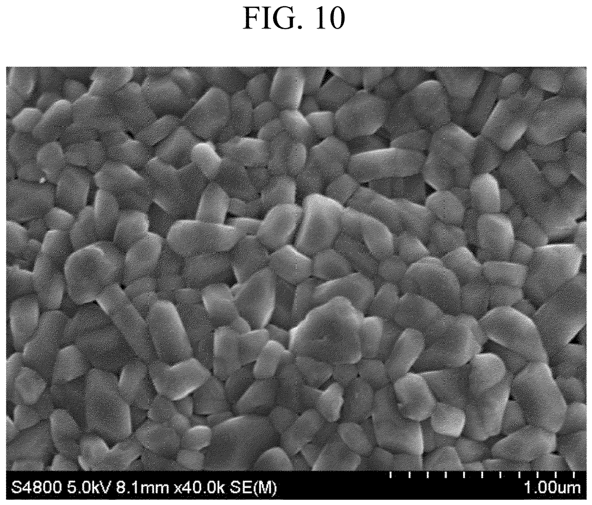

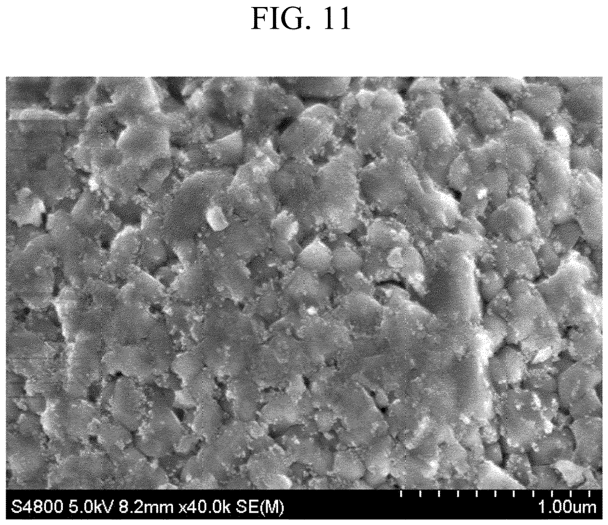

The surfaces of the first preliminary positive electrode active material and the mixed positive electrode active material prepared in Example 1 were photographed using SEM, and the images are shown in FIGS. 10 and 11, respectively.

FIG. 10 is an SEM image of the first preliminary positive electrode active material. From this image, it can be seen that boron is coated in the form of a film rather than particles on the surface.

FIG. 11 is a surface photograph of the large particles of the mixed positive electrode active material of Example 1. It can be seen that the grooves in the surface are largely filled with coated zirconium, thereby reducing friction between the positive electrode active materials.

**Evaluation Example 4: Measurement of Plate Density and Volume Capacity**

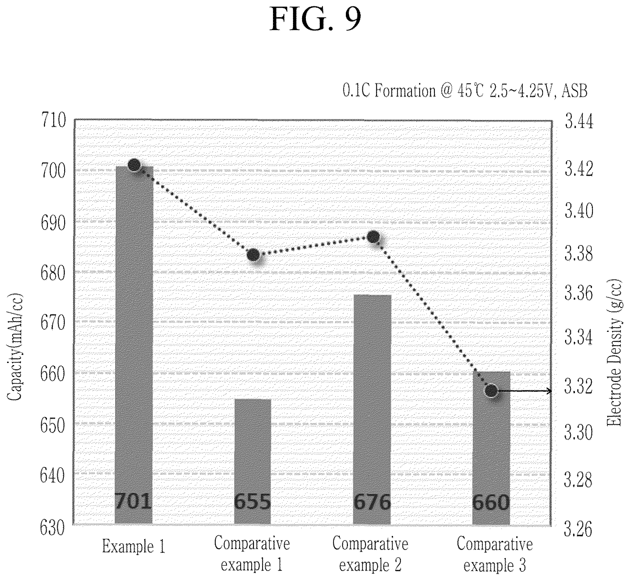

After the positive electrodes prepared in Example 1 and Comparative Examples 1 to 3 were subjected to warm isostatic pressing, the plate density was measured. The results are shown in Table 4 and FIG. 9. In addition, the volume capacity of the positive electrode plate was calculated by multiplying the initial discharge capacity measured in Evaluation Example 1 by the plate density, and the results are shown in Table 4 and FIG. 9.

Table 4

|  | Volume capacity (mAh/cc) | Electrode plate density (g/cc) |
|---|---|---|
| Example 1 | 701 | 3.42 |
| Comparative Example 1 | 655 | 3.38 |
| Comparative Example 2 | 676 | 3.39 |
| Comparative Example 3 | 660 | 3.32 |

Referring to Table 4 and FIG. 9, it can be seen that the plate densities of Example 1 and Comparative Examples 1 to 2, in which small particles in a monolithic form were mixed, were improved compared to Comparative Example 3. This is understood to be because the particles are located in the spaces between the large-particle positive electrode active materials, thereby improving the plate density.

In addition, when comparing the surface of the first preliminary positive electrode active material of FIG. 10 with the surface of the mixed positive electrode active material of FIG. 11, it can be seen that the plate density was improved by coating zirconium on the surface of the positive electrode active material as in Example 1, compared to the case where boron was coated on the surface of the positive electrode active material as in Comparative Example 2. In addition, in the case of Example 1, it is believed that friction between the positive electrode active materials will be further reduced by coating zirconium on the outermost surface of the positive electrode active material.

Due to the high initial capacity of Example 1 demonstrated by Evaluation Example 1 and the high plate density demonstrated in Evaluation Example 3, a high volume capacity can be realized.

## Evaluation Example 5: Thermal Stability Evaluation

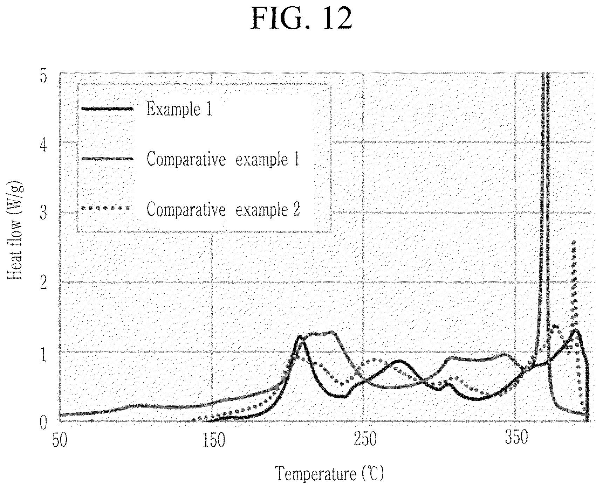

A positive electrode active material composition was prepared by mixing 85 wt% of the mixed positive electrode active materials of Example 1 and Comparative Examples 1 and 2, 13.5 wt% of an argyrodite-type solid electrolyte ($Li_6PS_5Cl$, $D_{50}$=1 $\mu$m), and 1.5 wt% of a carbon nanotube conductive material. A button cell was made using this positive electrode active material composition and In-Li foil as a negative electrode. The button cell was charged, and the charged positive electrode active material composition was recovered and subjected to differential scanning calorimetry (DSC) analysis under conditions of 5 °C/min. The results are shown in FIG. 12, and the heat flow of the highest peak appearing above 350 °C is summarized in Table 5.

Table 5

|  | Heat flow (W/g) |
| --- | --- |
| Example 1 | 1.3 |
| Comparative Example 1 | 10.5 |
| Comparative Example 2 | 2.6 |

Referring to Table 5, it can be seen that Comparative Example 1, in which zirconium was wet-coated using ethanol as a solvent as in a common method for coating a buffer layer of a positive electrode active material for an all-solid-state rechargeable battery has high reactivity in a charged state because the residual lithium of the positive electrode active material was washed away by ethanol, facilitating contact with the solid electrolyte.

However, in Example 1 and Comparative Example 2, where the buffer layer was coated by a dry method, it can be seen that the reactivity with the solid electrolyte was significantly reduced. In particular, Example 1, which was first coated with boron and then coated entirely with zirconium, has lower reactivity in a charged state than Comparative Example 2 due to difficulty in direct contact with the solid electrolyte, and the Example would provide excellent thermal stability when used in a battery.

## Evaluation Example 6: Zr Distribution Analysis Using STEM-EDS

The surface of the positive electrode active material prepared in Example 1 was photographed using STEM, and the distribution of Zr was evaluated using EDS. It was thereby confirmed that Zr was evenly distributed on the surface of the positive electrode active material of Example 1, and the thickness of the Zr-containing second coating layer was approximately 130 nm.

## Evaluation Example 7: Analysis of Coating Layer Crystal Phase using HRTEM

To analyze the crystal phase existing in the coating layer of the positive electrode active material, a cross-section of the positive electrode active material of Example 1 was photographed using HRTEM, a thickly coated portion of the positive electrode active material surface was selected from the photographed image, and an Inverse Fast Fourier Transform (IFFT) was performed to more precisely confirm the lattice spacing information for an arbitrary specific region. To more precisely check the lattice spacing information for the corresponding region, the periodic arrangement of crystal lattices for two specific regions in each of the second and third coating layers was confirmed by magnification, and it was confirmed that there existed a region corresponding to the $ZrO_2$ crystal phase with $d_{11\text{-}1}$ of 3.16 Å and the $Li_6Zr_2O_7$ crystal phase with $d_{112}$ of 3.45 A with the lattice spacing.

Thus, it was confirmed that the coating layer of the positive electrode active material obtained in Example 1

included a $ZrO_2$ crystal phase, a $Li_6Zr_2O_7$ crystal phase, and an amorphous phase portion containing Zr.

**Claims**

1. A positive electrode active material for an all-solid-state rechargeable battery, the positive electrode active material comprising:

   a first positive electrode active material comprising a first lithium nickel-based composite oxide particle in a form of secondary particles that are each formed by agglomeration of primary particles, with a first coating layer disposed on surfaces of the first lithium nickel-based composite oxide particles and including boron, and with a second coating layer disposed on the first coating layer and including zirconium; and
   a second positive electrode active material comprising a second lithium nickel-based composite oxide particle in a form of single particles, with a third coating layer disposed on surfaces of the second lithium nickel-based composite oxide particles and including zirconium.

2. The positive electrode active material as claimed in claim 1, wherein the first lithium nickel-based composite oxide particle is formed by agglomeration of primary particles, and at least some of the primary particles have a radial arrangement structure.

3. The positive electrode active material as claimed in claim 1 or 2, wherein an average particle diameter ($D_{50}$) of the secondary particles of the first positive electrode active material is 8 $\mu$m to 25 $\mu$m measured by scanning electron microscopy.

4. The positive electrode active material as claimed in any one of the preceding claims, wherein the second coating layer and/or the third coating layer comprises $ZrO_2$ and $Li_6Zr_2O_7$, in particular wherein the second coating layer and/or third coating layer comprises a $ZrO_2$ crystal phase, a $Li_6Zr_2O_7$ crystal phase, and a Zr-containing amorphous phase.

5. The positive electrode active material as claimed in any one of the preceding claims, wherein an average particle diameter ($D_{50}$) of the single particles of the second positive electrode active material is 2 $\mu$m to 7 $\mu$m measured by scanning electron microscopy, and
   wherein, based on 100 wt% of a total of the first positive electrode active material and the second positive electrode active material, the first positive electrode active material is included in an amount of 60 wt% to 95 wt%, and the second positive electrode active material is included in an amount of 5 wt% to 40 wt%.

6. The positive electrode active material as claimed in any one of the preceding claims, wherein the first coating layer of the first positive electrode active material comprises boron oxide, lithium boron oxide, or a combination thereof, and an amount of boron is 0.01 wt% to 0.5 wt% based on 100 wt% of a total metal in the first positive electrode active material excluding lithium.

7. The positive electrode active material as claimed in any one of the preceding claims, wherein the first positive electrode active material further comprises a grain boundary boron coating portion on surfaces of the primary particles in internal portions of the secondary particles, and
   wherein (i) a weight of boron in the first coating layer is at least four times a weight of boron in the grain boundary boron coating portion, or (ii) a ratio of the weight of boron in the first coating layer to the weight of boron in the grain boundary boron coating portion is 70:30 to 98:2.

8. The positive electrode active material as claimed in any one of the preceding claims, wherein the positive electrode active material further comprises a boron doping layer inside the primary particles that are exposed on surfaces of the secondary particles, and
   wherein the boron doping layer is located within a range of a depth of 10 nm from outer surfaces of the primary particles exposed to the surfaces of the secondary particles, and the boron doping layer is provided along a perimeter of the surfaces of the secondary particles.

9. The positive electrode active material as claimed in any one of the preceding claims, wherein an amount of zirconium in the second coating layer is 0.1 parts by mole to 0.6 parts by mole based on 100 parts by mole of total metals excluding lithium in the first lithium nickel-based composite oxide particle.

10. The positive electrode active material as claimed in any one of the preceding claims, wherein the second coating layer of the first positive electrode active material and the third coating layer of the second positive electrode active material each comprise $ZrO_2$ and $Li_6Zr_2O_7$,

wherein a total amount of an amount of zirconium in the second coating layer of the first positive electrode active material and an amount of zirconium in the third coating layer of the second positive electrode active material is 0.1 parts by mole to 0.6 parts by mole based on 100 parts by mole of total metals excluding lithium in the lithium nickel-based composite oxide of the first positive electrode active material and the lithium nickel-based composite oxide of the second positive electrode active material, and

wherein a thickness of each of the second coating layer of the first positive electrode active material and the third coating layer of the second positive electrode active material is 5 nm to 300 nm.

11. The positive electrode active material as claimed in any one of the preceding claims, wherein the first lithium nickel-based composite oxide particle comprises a lithium nickel-cobalt-aluminum-based composite oxide represented by Chemical Formula 1,

wherein the second lithium nickel-based composite oxide particle comprises a lithium nickel-cobalt-aluminum-manganese-based composite oxide represented Chemical Formula 2,

wherein Chemical Formula 1 is:

$$Li_{a1}Ni_{x1}CO_{y1}Al_{z1}M^1_{w1}O_{2-b1}X_{b1}$$

wherein, in Chemical Formula 1, $0.9 \leq a1 \leq 1.2$, $0.7 \leq x1 < 1$, $0 < y1 < 0.3$, $0 < z1 < 0.3$, $0 \leq w1 < 0.3$, $0.9 \leq x1+y1+z1+w1 \leq 1.1$, and $0 \leq b1 \leq 0.1$, $M^1$ is at least one of B, Ba, Ca, Ce, Cr, Cu, Fe, Mg, Mo, Nb, Si, Sr, Sn, Ti, V, W, Y, Se, Zn, and Zr, and X is at least one of F, P, and S,

wherein Chemical Formula 2 is:

$$Li_{a2}Ni_{x2}Co_{y2}Al_{z2}Mn_{w2}M^2_{v2}O_{2-b2}X_{b2}$$

wherein, in Chemical Formula 2, $0.95 \leq a2 \leq 1.2$, $0.7 \leq x2 < 1$, $0 < y2 < 0.3$, $0 < z2 < 0.3$, $0 < w2 < 0.3$, $0 \leq v2 < 0.3$, $0.9 \leq x2+y2+z2+w2+v2 \leq 1.1$, and $0 \leq b2 \leq 0.1$, $M^2$ is at least one of B, Ba, Ca, Ce, Cr, Cu, Fe, Mg, Mo, Nb, Si, Sr, Sn, Ti, V, W, Y, Se, Zn, and Zr, and X is at least one of F, P, and S.

12. A method of preparing a positive electrode active material for an all-solid-state rechargeable battery, the method comprising

(i) mixing a first positive electrode active material precursor in a form of secondary particles comprising a first nickel-based composite hydroxide and formed by agglomeration of primary particles, a lithium raw material, and a boron raw material, to thereby form a mixture,

(ii) performing a first heat treatment on the mixture at a temperature of 650 °C to 850 °C to obtain a boron-coated first preliminary positive electrode active material,

(iii) dry mixing the boron-coated first preliminary positive electrode active material, a second preliminary positive electrode active material comprising a second lithium nickel-based composite oxide and having a form of a single particle, and a zirconium raw material, to thereby form a dry mixture and

(iv) performing a second heat treatment on the dry mixture to obtain a positive electrode active material.

13. The method as claimed in claim 12, wherein the lithium raw material is mixed so that a molar ratio of lithium to a total metal of the first nickel-based composite hydroxide is 0.8 to 0.995,

wherein the boron raw material comprises $H_3BO_3$, $HBO_2$, $B_2O_3$, $C_6H_5B(OH)_2$, $(C_6H_5O)_3B$, $[CH_3(CH_2)_3O]_3B$, $C_{13}H_{19}BO_3$, $C_3H_9B_3O_6$, $(C_3H_7O)_3B$, or a combination thereof, and

wherein boron is mixed in an amount of 0.01 parts by mole to 0.5 parts by mole based on 100 parts by mole of total metals in the first nickel-based composite hydroxide excluding lithium.

14. The method as claimed in claim 12 or 13, wherein the first heat treatment is performed for 5 hours to 25 hours, and/or

wherein the first heat treatment comprises a temperature increase step and a temperature maintenance step, wherein a temperature increase time in the first heat treatment is longer than a temperature maintenance time in the first heat treatment,
wherein a ratio of the temperature increase time to the temperature maintenance time is 1.1:1 to 10:1, and
wherein the temperature increase time is 6 hours to 16 hours and the temperature maintenance time is 1 hours to 9 hours.

15. An all-solid-state rechargeable battery comprising

a positive electrode comprising the positive electrode active material for the all-solid-state rechargeable battery as claimed in claim 1,
a sulfide-based solid electrolyte,
a negative electrode, and
a solid electrolyte layer between the positive electrode and the negative electrode,
in particular wherein the negative electrode comprises a negative electrode current collector and a negative electrode coating layer disposed on the negative electrode current collector, the negative electrode coating layer comprising a compound in which a lithiophilic metal is supported on a carbon material or a mixture of lithiophilic metal particles and carbon material particles,
wherein a lithium metal layer formed by charging is included between the negative electrode current collector and the negative electrode coating layer,
wherein, in the negative electrode coating layer, the lithiophilic metal comprises Al, Ag, Au, Bi, Cu, Ge, In, Mg, Ni, Pd, Pt, Si, Sn, Zn, or a combination thereof, and the carbon material is crystalline carbon, amorphous carbon, or a combination thereof, and
wherein, based on 100 wt% of a total of the lithiophilic metal and the carbon material in the negative electrode coating layer, the lithiophilic metal is included in an amount of 3 wt% to 40 wt% and the carbon material is included in an amount of 60 wt% to 97 wt%.

# FIG. 1

(A)

(B)

(C)

FIG. 2

# FIG. 3

# FIG. 4

100

500
201 } 200
203 }
300
403 } 400
401 }
500

# FIG. 5

# FIG. 6

FIG. 7

# FIG. 8

# FIG. 9

0.1C Formation @ 45℃ 2.5~4.25V, ASB

# FIG. 10

S4800 5.0kV 8.1mm x40.0k SE(M)    1.00um

# FIG. 11

S4800 5.0kV 8.2mm x40.0k SE(M)        1.00um

# FIG. 12

Europäisches
Patentamt
European
Patent Office
Office européen
des brevets

# EUROPEAN SEARCH REPORT

**Application Number**

EP 25 20 3863

## DOCUMENTS CONSIDERED TO BE RELEVANT

| Category | Citation of document with indication, where appropriate, of relevant passages | Relevant to claim |
|---|---|---|
| X | US 11 909 043 B2 (SAMSUNG SDI CO LTD [KR]) 20 February 2024 (2024-02-20) | 1,3,5,6, 8,9 |
| Y | * claims 1-7; example 1; table 3 * | 15 |
| A | | 4,10 |
| | ----- | |
| X | US 2023/140577 A1 (NAM SANG CHEOL [KR] ET AL) 4 May 2023 (2023-05-04) | 1-3,5-9, 11 |
| Y | * paragraphs [0010], [0088], [0112] – [0115], [0126]; figure 1 * | 15 |
| | ----- | |
| X | EP 3 944 372 A1 (LG CHEMICAL LTD [KR]) 26 January 2022 (2022-01-26) | 12-14 |
| Y | * paragraphs [0023], [0024], [0030], [0061], [0109] - [0110] * | 15 |
| | ----- | |
| Y | EP 4 250 384 A1 (SAMSUNG SDI CO LTD [KR]) 27 September 2023 (2023-09-27) * paragraphs [0155] - [0162] * | 15 |
| | ----- | |

**CLASSIFICATION OF THE APPLICATION (IPC)**

INV.
H01M4/131
H01M4/36
H01M4/485
H01M4/525
H01M4/62

**TECHNICAL FIELDS SEARCHED (IPC)**

H01M

The present search report has been drawn up for all claims

| Place of search | Date of completion of the search | Examiner |
|---|---|---|
| Munich | 3 February 2026 | Lavorenti, Marek |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons
........................................................................
& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 25 20 3863

This annex lists the patent family members relating to the patent documents cited in the above-mentioned European search report.
The members are as contained in the European Patent Office EDP file on
The European Patent Office is in no way liable for these particulars which are merely given for the purpose of information.

03-02-2026

| Patent document cited in search report | | Publication date | Patent family member(s) | | Publication date |
|---|---|---|---|---|---|
| US 11909043 | B2 | 20-02-2024 | JP | 7130911 B2 | 06-09-2022 |
| | | | JP | 2021141064 A | 16-09-2021 |
| | | | KR | 20210111950 A | 14-09-2021 |
| | | | US | 2021280865 A1 | 09-09-2021 |
| US 2023140577 | A1 | 04-05-2023 | CN | 111771303 A | 13-10-2020 |
| | | | EP | 3734720 A1 | 04-11-2020 |
| | | | JP | 7008828 B2 | 25-01-2022 |
| | | | JP | 2021509220 A | 18-03-2021 |
| | | | KR | 20190078498 A | 04-07-2019 |
| | | | US | 2023140577 A1 | 04-05-2023 |
| | | | WO | 2019132332 A1 | 04-07-2019 |
| EP 3944372 | A1 | 26-01-2022 | CN | 113748542 A | 03-12-2021 |
| | | | EP | 3944372 A1 | 26-01-2022 |
| | | | JP | 7399538 B2 | 18-12-2023 |
| | | | JP | 2022529817 A | 24-06-2022 |
| | | | KR | 20210066745 A | 07-06-2021 |
| | | | US | 2022216463 A1 | 07-07-2022 |
| | | | WO | 2021107684 A1 | 03-06-2021 |
| EP 4250384 | A1 | 27-09-2023 | CN | 116805674 A | 26-09-2023 |
| | | | EP | 4250384 A1 | 27-09-2023 |
| | | | KR | 20230138774 A | 05-10-2023 |
| | | | US | 2023307695 A1 | 28-09-2023 |

For more details about this annex : see Official Journal of the European Patent Office, No. 12/82